# FASCICULE DE BREVET EUROPEEN

(11) **EP 3 927 763 B1**
(45) Date de publication et mention de la délivrance du brevet: **19.11.2025**
(21) Numéro de dépôt: 20706211.8
(22) Date de dépôt: 18.02.2020
(51) Int. Cl.: C08J 11/10, C08L 19/00, C08J 11/22

(54) **SYNTHESE DE POLYMERES FONCTIONNALISES PAR DEVULCANISATION A PARTIR DE DECHETS CONTENANT DES ELASTOMERES**
SYNTHESE VON FUNKTIONALISIERTEN POLYMEREN DURCH DEVULCANISIERUNG VON ELASTOMERENHALTIGEN ABFÄLLEN
SYNTHESIS OF FUNCTIONALISED POLYMERS BY DEVULCANISATION OF WASTE CONTAINING ELASTOMERS

(30) Priorité: 19.02.2019 FR 1901667
(43) Date de publication de la demande: 29.12.2021
(73) Titulaire: Centre national de la recherche scientifique, 75016 Paris (FR); Université de Caen Normandie, 14000 Caen (FR); Ecole Nationale Supérieure d'Ingénieurs de Caen, 14000 Caen (FR)
(72) Inventeur: DEZ, Isabelle, 14050 CAEN CEDEX 4 (FR); GAUMONT, Annie-Claude, 14050 CAEN CEDEX 4 (FR); NOËL, Jean-Nicolas, 44860 PONT-SAINT-MARTIN (FR)
(74) Mandataire: Ipsilon
(86) Numéro de dépôt international: PCT/EP2020/054215
(87) Numéro de publication internationale: WO 2020/169589

(56) Documents cités:
- CH-A- 232 893
- FR-A1- 3 014 104
- US-A- 4 305 850
- US-A1- 2014 128 535
- US-A1- 2016 152 805
- ZOHURI GASADI S.KARIMINEJAD M.MORTAZAVI S.M.CHENAR M.P.SABZEKAR M.: "Influence of process variables on chemical devulcanization of sulfur-cured natural rubber", POLYMER DÉGRADATION AND STABILITY, vol. 118, 2015, pages 88 - 95, XP029233308

## Description

### Domaine technique

La présente invention se rapporte au domaine du traitement des déchets contenant des élastomères, d'origine naturelle et/ou synthétique. L'invention cible, en particulier, les déchets contenant du caoutchouc dont la majeure partie est composée des déchets pneumatiques.

La présente invention vise le traitement des déchets contenant des élastomères hautement vulcanisés, comme par exemple les déchets pneumatiques de camion.

### Etat de la technique antérieure

On connait dans l'état de la technique antérieure la valorisation énergétique des déchets de caoutchouc. La valorisation énergétique consiste à incinérer les déchets de caoutchouc pour produire de l'énergie. La valorisation énergétique est extrêmement polluante.

On connait dans l'état de la technique antérieure la valorisation mécanique des déchets de caoutchouc. Cette technique consiste à broyer des déchets afin de produire des granulats qui pourront être utilisés en tant qu'additifs par les cimenteries ou être incorporés dans certains matériaux.

On connait également dans l'état de la technique antérieure la valorisation chimique des déchets de caoutchouc. La valorisation chimique comprend la pyrolyse et la dévulcanisation. La pyrolyse consiste à décomposer les déchets de caoutchouc en présence partielle ou complète d'oxygène afin d'obtenir, entre autre, une huile pyrolytique. La pyrolyse des déchets de caoutchouc est un procédé très couteux.

La dévulcanisation consiste à rompre les nœuds de réticulation en provoquant la rupture des liaisons carbone-soufre et/ou des ponts disulfures de sorte à briser partiellement ou complétement la structure tridimensionnelle du caoutchouc vulcanisé. On connait dans l'état de la technique la dévulcanisation mécanique, la dévulcanisation par micro-ondes et la dévulcanisation chimique.

La dévulcanisation mécanique est réalisée par extrusion et provoque une rupture non sélective des ponts disulfures, les liaisons carbone-carbone de la chaine polymère étant également rompues.

La dévulcanisation par micro-ondes vise à rompre les liaisons carbone-soufre ou les ponts disulfures par émission de micro-ondes définies. Toutefois, et a fortiori en présence de noir de carbone dans la composition des déchets de caoutchouc comme c'est le cas des déchets pneumatiques, cette méthode provoque une montée en température très importante des déchets en quelque secondes. Cette brusque montée en température aboutit à la rupture des liaisons carbone-carbone de la chaine polymère.

Enfin, on connait la dévulcanisation chimique des déchets de caoutchouc soit par métathèse de disulfure, soit par rupture des ponts disulfures au moyen d'un agent de dévulcanisation.

La métathèse présente le désavantage majeur d'être une réaction équilibrée interdisant l'obtention de taux de dévulcanisation important.

En ce qui concerne la dévulcanisation par rupture des ponts disulfures au moyen d'un agent de dévulcanisation, elle présente l'avantage d'être faiblement énergivore. Néanmoins, ce procédé présente encore des limitations liées aux taux de dévulcanisation obtenus qui restent relativement faibles et à son manque de sélectivité. La limite principale de cette technique réside dans l'obtention de taux de dévulcanisation extrêmement faibles lorsque les caoutchoucs à dévulcaniser présentent des taux de vulcanisation élevés.

Concernant la dévulcanisation chimique, on connait dans l'état de la technique les documents Rooj S., Maji P.K., Basak G.C., Bhowmick A.K., Journal of Polymers and the Environment, 2011, vol.19, pp.382-390 et Zohuri G, Asadi S., Kariminejad M., Mortazavi S.M., Chenar M.P., Sabzekar M., Polymer Degradation and Stability 2015, vol.118, pp.88-95. En plus, US4305850A et CH232893A divulguent un procédé de traitement d'un élastomère (caoutchouc) avec un peroxyde organique en vue d'une dévulcanisation/décomposition. Aucun des documents cités ne divulgue l'utilisation d'un peroxyde selon la formule 1 de la demande. Cette formule exclut explicitement l'utilisation du peroxyde de benzoyle (où R = R' = H).

Un but de l'invention est de pallier ces inconvénients et notamment de proposer un procédé de synthèse de polymères par dévulcanisation de déchets contenant des élastomères.

Un autre but est de proposer un procédé de synthèse de polymères par dévulcanisation de déchets contenant des élastomères présentant un taux de dévulcanisation élevé.

Un autre but est de proposer un procédé de synthèse sélectif de polymères par dévulcanisation de déchets contenant des élastomères permettant de contrôler la microstructure des polymères obtenus.

Un autre but est de proposer un procédé de synthèse de polymères par dévulcanisation de déchets contenant des élastomères permettant d'obtenir des taux de dévulcanisation élevés à partir de déchets de caoutchouc hautement vulcanisés.

Un autre but est de proposer un procédé de synthèse de polymères par dévulcanisation de déchets contenant des élastomères permettant de synthétiser des polymères fonctionnalisés.

### Présentation de l'invention

A cet effet, selon un premier aspect de l'invention, il est proposé un procédé de synthèse de polymères par dévulcanisation à partir de déchets contenant des élastomères. Le procédé selon l'invention comprend :
- a) la mise en contact desdits déchets contenant des élastomères avec un solvant en présence d'un agent de dévulcanisation,
- b) le chauffage du mélange obtenu à l'étape a), à une température comprise entre 20°C et à 250°C pendant une durée comprise entre 15 minutes et 24 heures.
Ainsi selon le premier aspect de l'invention, l'agent de dévulcanisation, dit AD, est un amorceur radicalaire. Par exemple, l'agent de dévulcanisation est un agent de dévulcanisation de noeuds de réticulation comprenant un atome de soufre lié à un autre de soufre ou à un atome de carbone. L'amorceur radicalaire est apte à former un ou des radicaux. De préférence, l'agent de dévulcanisation est apte à former des radicaux par homolyse. De préférence encore, l'agent de dévulcanisation est un peroxyde.

Selon le premier aspect de l'invention, soit :
- l'amorceur radicalaire est un composé de formule (1) 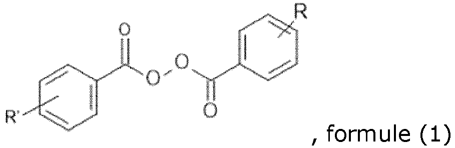 dans lequel R et R' sont identiques ou différents et représentent chacun, indépendamment l'un de l'autre, un substituant exerçant un effet mésomère donneur ou un effet mésomère attracteur ou un effet inductif donneur ou un effet inductif attracteur, soit
- la concentration en agent de dévulcanisation, est telle que le rapport entre ladite concentration en agent de dévulcanisation, exprimée en partie pour cent d'élastomère (phr), et un volume de solvant, exprimé en ml, soit :
   - supérieure à 0,3 phr/ml de solvant ou inférieure à 0,2 phr/ml de solvant lorsque le procédé est réalisé sous air,
   - supérieure à 0,06phr/ml de solvant lorsque le procédé est réalisé sous atmosphère inerte.

Conformément à l'invention, R et R' exerçant un effet mésomère donneur, un effet mésomère attracteur, une effet inductif donneur ou un effet inductif attracteur sont choisis indépendamment l'un de l'autre dans le groupe comprenant l'hydrogène (-H), les atomes d'halogène choisi parmi l'iode, le brome, le fluor et le chlore, le groupe des (C₁-₁₈)alkyles, les amines primaire (-NH₂), secondaire (-NHRa₁ Ra₁ étant choisi parmi les groupes (C₁-C₅)alkyles et les cycles aromatiques) ou tertiaire (-NRa₁Ra₂, où Ra₁ et Ra2 identiques ou différents peuvent être chacun indépendamment l'un de l'autre un groupe (C₁-C₅)alkyle ou un cycle aromatique), l'hydroxyle (-OH), les alcoolates (ou un sel) (Ra₁-O⁻, Ra₁ étant choisi parmi les groupes (C₁-C₅)alkyles et les cycles aromatiques), les groupes (C₁-C₅)alkoxy, un thiol (-SH), les thioéther (-SRa₁, Ra₁ étant choisi parmi les groupes (C₁-C₅)alkyles et les cycles aromatiques), un thiolate (ou un sel) (Ra₁-S⁻), Ra₁ étant choisi parmi les groupes (C₁-C₅)alkyle et les cycles aromatiques), un cycle aromatique, une base conjuguée d'un acide carboxylique (-COO⁻), un groupe carboxylique (-COOH), les esters (-CO₂ Ra₁, Ra₁ étant choisi parmi les groupes (C₁-C₅)alkyles et les hétérocycles), un groupe aldéhyde (-CHO), un carbonyle (-COR), un groupe nitro (-NO₂), un groupe nitrile (-CN), un groupe sulfonyle (-SO₂-), un groupe sulfonate (sel ou acide)(-SO₃), un sulfone (-SO₂R), un groupe phosphate -O-PO(ORa₁)(ORa₂) où Ra₁ et Ra₂ identiques ou différents peuvent être chacun indépendamment l'un de l'autre un groupe hydrogène ou (C₁-C₅)alkyle ou un cycle aromatique), un groupe amide primaire (-CONH₂), secondaire (-CONHRa₁, Ra₁ étant choisi parmi les groupes (C₁-C₅)alkyles et les cycles aromatiques ) ou tertiaire (-CONRa₁Ra₂, Ra₁ et Ra₂ identiques ou différents peuvent être chacun indépendamment l'un de l'autre un groupe (C₁-C₅)alkyle ou un cycle aromatique)).

Le terme (C₁-C₁₈)alkyle signifie toute chaîne carbonée linéaire ou ramifiée ayant de 1 à 18 atomes de carbone et inclut tous les groups alkyles ayant 1 à 18 atomes de carbone comme par exemple les groupes méthyle, éthyle, n-propyle, isopropyle, n-butyle, isobutyle, tert-butyle, neopentyle, isopentyle, hexyle, heptyle, octyle, nonyle, décyle, undécyle, dodécyle, tridécyle, tétradécyle, pentadécyle, hexadécyle, heptadécyle et octadécyle. De préférence, le groupe des (C₁-C₁₈)alkyle comprend des chaines de 1 à 8 atomes de carbone ou groupe (C₁-C₅)alkyle en particulier les groupes méthyle, éthyle, n-propyle, isopropyle, n-butyle, isobutyle, tert-butyle, neopentyle, isopentyle, hexyle, heptyle, octyle, de préférence encore des chaines de 1 à 5 atomes de carbone ou (C₁-C₅)alkyle comme par exemple les groupes méthyle, éthyle, n-propyle, isopropyle, n-butyle, isobutyle, tert-butyle, neopentyle, isopentyle et de manière d'avantage préférée des chaines de 1 à 3 atomes de carbone ou (C₁-C₃)alkyle, en particulier les groupes méthyle, éthyle, n-propyle et isopropyle.

Le terme (C₁-C₅)alkyle signifie toute chaîne carbonée linéaire ou ramifiée ayant de 1 à 5 atomes de carbone et inclut tous les groups alkyles ayant 1, 2, 3, 4 ou 5 atomes de carbone, en particulier les groupes méthyle, éthyle, n-propyle, isopropyle, n-butyle, isobutyle, tert-butyle, neopentyle et isopentyle .

Le terme (C₁-C₅)alkoxy est un groupe O-(C₁-C₅)alkyle où le groupe (C₁-C₅)alkyle est tel que défini précédemment. On peut citer à titre d'exemple les groupes méthoxy, éthoxy, butoxy et pentoxy.

Le terme cycle aromatique inclut les groupes aryles, notamment les groupes phényle, benzyle, naphthyle, biphényle et tétrahydronaphthyle ainsi que les hétérocycles c'est-à-dire des cycles qui outre les atomes de carbone, comprennent également des hétéroatomes comme l'azote, l'oxygène et le soufre. Ainsi peuvent être cités à titre d'exemple d'hétérocycles, les benzimidazolyles, les furyles, les imidazolyles, les pipérazinyles, les pipéridinyles, les pyranyles, les pyrazinyles, les pyroazolidinyles, les pyrazolinyles, les pyrazolyles, les pyridazinyles, les pyridooxazoles, les pyridoimidazoles.

De manière préférée, R et R' représentent chacun, indépendamment l'un de l'autre, un atome d'hydrogène, un atome de fluor, un groupement méthoxy ou un groupement acétoxy.

De manière encore d'avantage préférée, R et R' sont identiques et représentent chacun, un atome de fluor, un groupement méthoxy ou un groupement acétoxy.

Lorsque l'amorceur radicalaire est un composé de formule (1), les polymères obtenus par la mise en œuvre du procédé sont des polymères fonctionnalisés.

Dans un mode de réalisation avantageux du premier aspect de l'invention :
- l'amorceur radicalaire est un composé de formule (1), et
- la concentration en agent de dévulcanisation, est telle que le rapport entre ladite concentration en agent de dévulcanisation, exprimée en partie pour cent d'élastomère (phr), et un volume de solvant, exprimé en ml, soit :
   - supérieure à 0,3 phr/ml de solvant ou inférieure à 0,2 phr/ml de solvant lorsque le procédé est réalisé sous air,
   - supérieure à 0,06phr/ml de solvant lorsque le procédé est réalisé sous atmosphère inerte.

De manière avantageuse, R, R' ou les deux sont différents d'un atome d'hydrogène. En d'autres termes, soit R et R' sont différents d'un atome d'hydrogène, soit R est différent d'un atome d'hydrogène, soit R' est différent d'un atome d'hydrogène. En d'autres termes, R et R' ne sont pas simultanément un atome d'hydrogène.

Le procédé selon l'invention permet d'obtenir des polymères. De préférence, le procédé selon l'invention permet d'obtenir des polymères, notamment des élastomères.

Selon l'invention, les polymères obtenus sont des polymères fonctionnalisés de formule 2 et/ou 2' 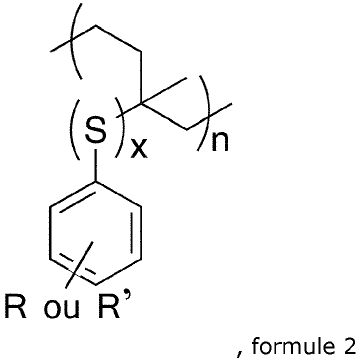 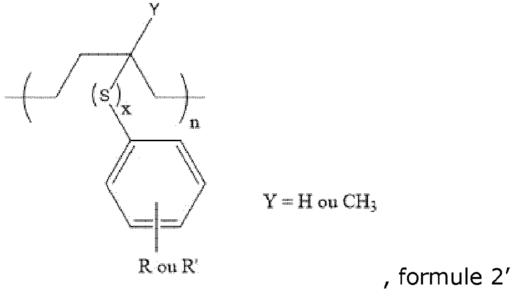 dans laquelle
R et R' sont identiques ou différents et sont tels que définis précédemment, et
x est un nombre entier compris entre 0 et 6 et de préférence égal à 0, 1, 2, 3, 4, 5 ou 6, et
n est un nombre entier compris entre 6 et 600. Le nombre n représente le nombre de motifs, comprenant chacun un groupement fonctionnel, ayant été introduit le long de la chaîne polymère lors de la dévulcanisation.

De manière avantageuse, R et R' sont différents d'un atome d'hydrogène.

A la différence des procédés de l'état de l'art dans lesquels le ou les groupements fonctionnels sont introduits uniquement en bout de chaîne polymère, le ou les groupement(s) fonctionnel(s) est (sont) introduit(s) au sein de la chaîne polymère. Ainsi, le procédé selon l'invention permet d'introduire le ou les groupement(s) fonctionnel(s) au sein de la chaîne polymère, et ainsi d'obtenir des polymères fonctionnalisés de formule 2 et/ou 2'.

Le procédé selon l'invention, est basé sur la synthèse de polymères par dévulcanisation des nœuds de réticulation présents dans les déchets à partir desquels le procédé est mis en œuvre. Un nœud de réticulation comprend au moins un atome de soufre lié à un autre atome de soufre ou à un atome de carbone. De tels nœuds de réticulation sont présents, en particulier, dans les élastomères. Aussi, selon l'invention, il est entendu par déchets contenant des élastomères, des déchets contenant suffisamment d'élastomères pour qu'après mise en œuvre du procédé, la quantité de polymères synthétisée soit suffisante pour pouvoir être récupérée. L'homme du métier, à partir de ses connaissances générales sera apte à définir, à partir de la teneur en élastomères des déchets à traiter, si la synthèse de polymères par mise en œuvre du procédé selon l'invention s'avère pertinente.

Conformément à l'invention, un déchet comprenant au moins 10%, de préférence au moins 30%, en masse d'élastomères par rapport à la masse totale de déchets présente une concentration suffisante pour que la synthèse de polymère par dévulcanisation selon l'invention soit réalisée à partir dudit déchet.
Selon l'invention, les déchets contenant des élastomères peuvent comprendre :
- du polyisoprène et/ou du polybutadiène, et/ou
- du butadiène-acrylonitrile, (Nitrile Butadiene Rubber ou NBR), et/ou
- du styrène-butadiène, (Styrene-Butadiene Rubber SBR), et/ou
- des monomères d'éthylène-propylène diène, (Ethylene Propylene Diene Monomer ou EPDM), et/ou
- peuvent être des déchets de caoutchouc naturel (Natural Rubber ou NR), et/ou du caoutchouc butyle.

De préférence, les déchets contenant des élastomères peuvent être des déchets pneumatiques de camion, dits déchets élastomères hautement vulcanisés. Il est entendu par hautement vulcanisé des élastomères présentant une densité de réticulation supérieure à 10⁻⁴ mol/ml, de préférence supérieure à 10⁻³ mol/ml.

A titre d'exemple non limitatif, si le déchet est un déchet pneumatique, il contient, une fois enlevées les parties métalliques, essentiellement du caoutchouc, dit gomme, et du noir de carbone, dit charge.

Suivant un mode de réalisation particulier de l'invention, les déchets pneumatiques utilisés sont du pneu coupé, du déchiquetas, de la poudrette ou du granulat, de préférence de la poudrette ou du granulat.

De préférence, lorsque le procédé est mis en œuvre sous air, la concentration en agent de dévulcanisation, est :
- comprise entre 0,3phr/ml de solvant et la valeur de concentration, en phr/ml de solvant, pour laquelle la limite de solubilité de l'AD dans le solvant est atteinte, ou
- inférieure à 0,2phr/ml de solvant.
L'homme du métier, à l'aide de ses connaissances générales et de l'enseignement du présent document sera apte à déterminer la concentration maximale en AD qu'il est possible ou qu'il conviendra d'utiliser. De la même manière, lorsque la concentration en AD est inférieure à 0,2phr/ml de solvant, l'homme du métier, à l'aide de ses connaissances générales et de l'enseignement du présent document, sera apte à déterminer la concentration minimale en AD qu'il est possible ou qu'il conviendra d'utiliser.

De préférence encore, lorsque le procédé est mis en œuvre sous air, la concentration en AD est :
- comprise entre 0,3phr/ml et 8phr/ml de solvant, ou
- inférieure à 0,2phr/ml de solvant.

De préférence encore, lorsque le procédé est mis en œuvre sous air, la concentration en AD est :
- comprise entre 0,3phr/ml et 0,6phr/ml de solvant, ou
- inférieure à 0,2phr/ml de solvant.

De préférence, lorsque le procédé est mis en œuvre sous argon, la concentration en AD est comprise entre 0,06phr/ml de solvant et la valeur de sa concentration, en phr/ml de solvant, pour laquelle la limite de solubilité de l'AD dans le solvant est atteinte.

De préférence encore, lorsque le procédé est mis en œuvre sous atmosphère inerte, la concentration en AD est comprise entre 0,06phr/ml et 8phr/ml de solvant.

De préférence encore, lorsque le procédé est mis en œuvre sous atmosphère inerte, la concentration en AD est comprise entre 0,06phr/ml et 0,6phr/ml de solvant.

Conformément à l'invention, il est entendu par atmosphère inerte une atmosphère qui ne réagit pas dans les conditions de mise en œuvre du procédé. On peut citer à titre d'exemple non limitatif, une atmosphère composée majoritairement d'azote et/ou de gaz noble comme par exemple l'argon. De préférence, l'atmosphère est composée d'azote et/ou de gaz noble.

De préférence, l'étape b du procédé est mise en œuvre à une température du mélange comprise entre 20°C et 150°C, de préférence encore, comprise entre 40°C et 120°C, de manière d'avantage préférée, comprise entre 60°C et 100°C. De manière d'avantage préférée entre toute, le procédé est mis en œuvre à une température de 80°C.

De préférence, la durée de chauffage est comprise entre 1h et 8h, de préférence encore comprise entre 1 et 6h.

De préférence, R et R' sont choisis parmi les groupes comprenant un ou plusieurs atomes de carbone et/ou d'oxygène et/ou d'azote et/ou de phosphore et/ou de soufre et/ou d'halogène.

Les polymères synthétisés par le procédé selon l'invention peuvent être composés d'un mélange comprenant des polymères et des oligomères. De manière préférée, les polymères synthétisés sont des oligomères. Selon l'invention, les oligomères sont considérés comme une chaîne de monomères présentant une masse molaire inférieure à 2000 g/mol.

Selon l'invention, le solvant peut être un solvant organique ou un liquide ionique ou un solvant eutectique profond ou leur mélange. A titre d'exemple, le liquide ionique peut être choisi parmi les phosphoniums, les imadazoliums ou les pyridiniums. Les liquides ioniques selon l'invention sont constitués d'un anion et d'un cation et peuvent être de formule générale suivante : 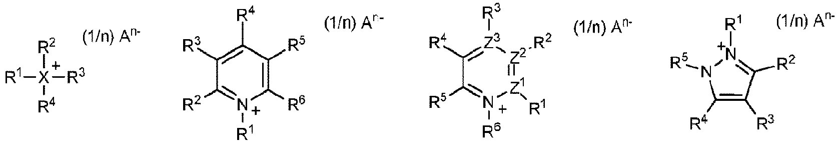 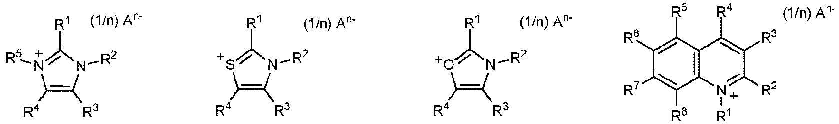 , dans lesquelles
- Aⁿ⁻ est un anion sélectionné dans le groupe comprenant PF6⁻, NO3⁻, F, Cl⁻, Br⁻, I⁻, R⁹S0₃⁻, R⁹S03⁻, R⁹C0₃⁻, CF₃SO₃⁻, BF₄⁻, B(R⁹)₄⁻, CF₃CO₂⁻, R⁹P0₂⁻, (CF₃S0₂)N⁻, CH₃SO₃⁻, (C₁₂ H₂₅)C₆H₄SO₃⁻, R⁹C0₂⁻; R⁹ étant choisi dans le groupe comprenant alkyle substitué ou non substitué, aryle substitué ou non substitué, et alkoxy ; avec n étant égal à 1, 2 ou 3 selon la charge négative de l'anion précédemment cité et (1/n) étant égal à 1 si l'anion possède une charge négative, 1/2 si l'anion possède deux charges négatives et 1/3 si l'anion possède trois charges négatives,
- X est un atome d'azote, de phosphore ou de soufre avec la condition que lorsque X est un atome de soufre, au moins un des groupements R¹, R², R³, R⁴ est nul,
- R¹, R², R³, R⁴, R⁵, R⁶, R⁷ et R⁸ sont identiques ou différents chacun étant choisi dans un groupe comprenant hydrogène, halogène, alkoxy, alkyle substitué ou non substitué, aryle substitué ou non substitué, et R¹-R², R²-R³, R³-R⁴, R⁴-R⁵ , R⁵-R⁶, R⁶-R⁷, R⁷-R⁵ ou R⁸-R¹ peuvent représenter un cycle à 5, 6 ou 7 atomes de carbones,
- Z¹, Z², Z³ sont identiques ou différents et sont choisis dans un groupe comprenant un atome de carbone et un atome d'azote, à la condition qu'au moins un des atomes Z¹, Z² et Z³ représente un atome d'azote et lorsque un des atomes Z¹, Z² et Z³ est un atome d'azote, le groupement R¹, R², R³ correspondant est nul.

Ces liquides ioniques sont décrits aux pages 9 à 15 de la demande de brevet FR 3014104.

Les solvants eutectiques profonds selon l'invention peuvent être choisis parmi :
- les mélanges de sel d'ammonium quaternaire et de chlorure de métal, à titre d'exemple non limitatif un tel mélange peut être un mélange d'1-éthyl-3-méthylimidazolium et de chlorure d'aluminium (AlCl₃),
- les mélanges de sel d'ammonium quaternaire et de chlorure de métal hydraté,
- les mélanges de sel d'ammonium quaternaire et de donneur de liaison hydrogène, à titre d'exemple non limitatif le donneur de liaison hydrogène peut être de l'urée ou un dérivé de l'urée,
- les mélanges de chlorure de métal hydraté et de donneur de liaison hydrogène, à titre d'exemple non limitatif le donneur de liaison hydrogène peut être de l'urée ou un dérivé de l'urée et à titre d'exemple non limitatif un tel mélange peut être un mélange de chlorure d'aluminium (AlCl₃) et d'urée.

De manière préférée, le solvant eutectique profond peut être un mélange de chlorure de choline et d'urée. De manière d'avantage préférée, le solvant eutectique profond peut être un mélange de chlorure de choline à 1 mol/l et d'urée à 2 mol/l.

Les solvants eutectiques profonds peuvent comprendre, en partie ou totalement, des produits naturels parmi un mélange d'acide aconitique et de chlorure de choline, un mélange d'acide malique et de glucose, un mélange d'acide malique et de fructose, un mélange d'acide malique et de sucrose, un mélange d'acide citrique et de sucrose, un mélange d'acide maléique et de sucrose, un mélange de glucose et de fructose, un mélange de fructose et de sucrose, un mélange de glucose et de sucrose, un mélange d'acide maléique et de glucose, un mélange d'acide citrique et de glucose.

Le solvant peut être un mélange de solvants. De préférence, le solvant peut être un mélange de solvant organique et de liquide ionique ou un mélange de solvant organique et d'un eutectique profond.

Le solvant organique est choisi parmi les solvants apolaires aromatiques ou aliphatiques. De préférence, le solvant organique est du xylène.

La durée de chauffage du mélange peut être comprise entre 1 et 12 heures lorsque le procédé est réalisé sous atmosphère inerte.

De manière préférée, la durée de chauffage du mélange peut être comprise entre 2 heures et 4 heures lorsque le procédé est réalisé sous atmosphère inerte.

De manière d'avantage préférée, la durée de chauffage du mélange est de 3 heures lorsque le procédé est réalisé sous atmosphère inerte.

La durée de chauffage du mélange peut être comprise entre 1 et 12 heures lorsque le procédé est réalisé sous air.

De manière préférée, la durée de chauffage du mélange peut être comprise entre 3 heures et 5 heures lorsque le procédé est réalisé sous air.

De manière d'avantage préférée, la durée de chauffage du mélange est de 4 heures lorsque le procédé est réalisé sous air.

De manière d'avantage préférée, lorsque le procédé est mis en œuvre sous air, la concentration en AD est inférieure à 0,2phr/ml de solvant.

Le procédé peut comprendre, préalablement à l'étape a), une étape d'activation des déchets contenant des élastomères, par lyophilisation ou par gonflement ou par traitement au CO₂ supercritique. Le gonflement peut être réalisé dans un solvant organique, un liquide ionique ou un solvant eutectique profond. La lyophilisation peut être réalisée directement dans l'eau puis l'eau est retirée par sublimation. La lyophilisation peut être réalisée dans un solvant différent de l'eau, dans ce cas une étape d'échange de solvant depuis le solvant, qui est différent de l'eau, vers l'eau est réalisée préalablement à l'étape de sublimation. Pour le traitement au CO₂ supercritique, les déchets sont gonflés dans du CO₂ fluide puis le CO₂ est retiré par évaporation. L'homme du métier, à l'aide de ses connaissances générales, est apte à mettre en œuvre ces différentes techniques d'activation des déchets.

L'étape d'activation par gonflement peut être réalisée dans un solvant identique ou différent de celui utilisé lors de la mise en œuvre de la dévulcanisation.

De préférence, l'étape d'activation par gonflement peut être réalisée :
- dans un solvant organique de moment dipolaire compris entre 0,5 et 2,5 Debye, ou
- dans un liquide ionique, un solvant eutectique profond ou par traitement au dioxyde de carbone supercritique.

De préférence, le solvant organique de moment dipolaire compris entre 0,5 et 2,5 Debye est un solvant aprotique.

De préférence, le solvant organique de moment dipolaire compris entre 0,5 et 2,5 Debye est le dichlorométhane (DCM) ou le tétrahydrofurane (THF).

Lorsque l'étape d'activation par gonflement est réalisée dans un solvant organique de moment dipolaire compris entre 0,5 et 2,5 Debye, l'étape de gonflement est mise en œuvre hors du mélange, préalablement à la dévulcanisation.

Le procédé peut également comprendre, subséquemment à l'étape b), une étape de séparation des polymères obtenus. Cette étape peut être réalisée par toute technique connue de l'homme du métier, par exemple par filtration, centrifugation, précipitation. On récupère la phase liquide, qui contient les polymères. Dans le cas d'un déchet pneumatique, la phase solide, qui contient le noir de carbone peut être réutilisée dans une nouvelle formulation.

Lorsque les polymères synthétisés par le procédé de dévulcanisation selon l'invention comprennent un mélange comprenant des polymères et des oligomères, l'étape de séparation peut comprendre une étape :
- de récupération des oligomères solubilisés dans un solvant, par exemple un solvant polaire, dans lequel les polymères ne sont pas solubles, et/ou
- de métathèse générant la rupture des doubles liaisons carbone-carbone des polymères non solubles dans le solvant utilisé pour solubiliser les oligomères de sorte à former des oligomères solubles dans ledit solvant.

La réaction de dévulcanisation et l'étape d'activation des déchets de caoutchouc peuvent être mises en œuvre en continu.

De préférence, lorsque la réaction de dévulcanisation et l'étape d'activation des déchets contenant des élastomères sont mises en œuvre en continu, elles sont mises en œuvre concomitamment.

De préférence, lorsque la réaction de dévulcanisation et l'étape d'activation des déchets contenant des élastomères sont mises en œuvre en continu, elles sont mises en œuvre dans le mélange.

De préférence, lorsque la réaction de dévulcanisation et l'étape d'activation des déchets contenant des élastomères sont mises en œuvre en continu, le solvant du mélange est un liquide ionique ou un eutectique profond.

Lorsque la réaction de dévulcanisation et l'étape d'activation des déchets contenant des élastomères sont mises en œuvre en continu dans un liquide ionique ou un eutectique profond, les polymères obtenus précipitent directement dans le mélange.

Selon l'invention, le procédé selon le premier aspect de l'invention est un procédé de recyclage permettant de valoriser des déchets comprenant des élastomères.

Selon un deuxième aspect de l'invention, il est proposé un élastomère fonctionnalisé selon la formule 3 et/ou 3', 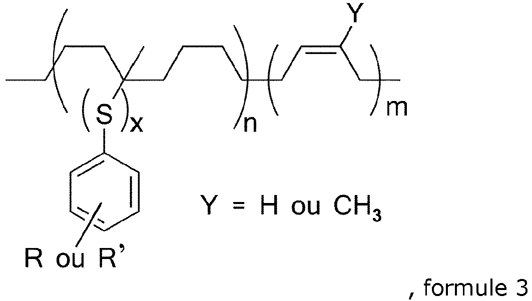 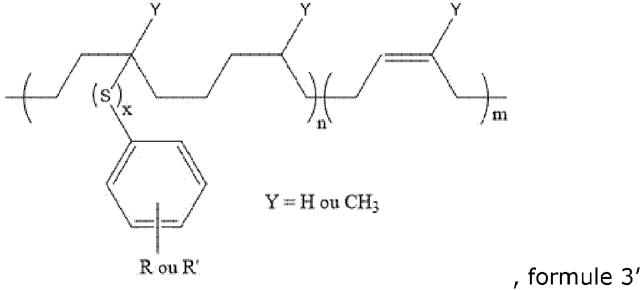 dans lequel
x est un nombre entier compris entre 0 et 6, de préférence égale à 0, 1, 2, 3, 4, 5, ou 6,
n représente le nombre de motifs, comprenant chacun un groupement fonctionnel ayant été introduit le long de la chaîne polymère lors de la dévulcanisation, et est un nombre entier compris entre 6 et 600,
m représente le nombre de monomères que comprend le polymère et est un nombre entier compris entre 6 et 600,
Y est un atome d'hydrogène ou un groupe méthyle, et
R et R', identique ou différent pour chaque motif, sont choisis dans le groupe comprenant l'hydrogène (-H), les atomes d'halogène choisi parmi l'iode, le brome, le fluor et le chlore, le groupe des (C₁-₁₈)alkyles, les amines primaire (-NH₂), secondaire (-NHRa₁ Ra₁ étant choisi parmi les groupes (C₁-C₅)alkyles et les cycles aromatiques) ou tertiaire (-NRa₁Ra₂, où Ra₁ et Ra2 identiques ou différents peuvent être chacun indépendamment l'un de l'autre un groupe (C₁-C₅)alkyle ou un cycle aromatique), l'hydroxyle (-OH), les alcoolates (ou un sel) (Ra₁-O-, Ra₁ étant choisi parmi les groupes (C₁-C₅)alkyles et les cycles aromatiques), les groupes (C₁-C₅)alkoxy, un thiol (-SH), les thioéther (-SRa₁, Ra₁ étant choisi parmi les groupes (C₁-C₅)alkyles et les cycles aromatiques), un thiolate (ou un sel) (Ra₁-S⁻, Ra 1 étant choisi parmi les groupes (C₁-C₅)alkyle et les cycles aromatiques), un cycle aromatique, une base conjuguée d'un acide carboxylique (-COO⁻), un groupe carboxylique (-COOH), les esters (-CO₂ Ra₁, Ra₁ étant choisi parmi les groupes (C₁-C₅)alkyles et les hétérocycles), un groupe aldéhyde (-CHO), un carbonyle (-COR), un groupe nitro (-NO₂), un groupe nitrile (-CN), un groupe sulfonyle (-SO₂-), un groupe sulfonate (sel ou acide)(-SO₃), un sulfone (-SO₂R), un groupe phosphate -O-PO(ORa₁)(ORa₂) où Ra₁ et Ra₂ identiques ou différents peuvent être chacun indépendamment l'un de l'autre un groupe hydrogène ou (C₁-C₅)alkyle ou un cycle aromatique), un groupe amide primaire (-CONH₂), secondaire (-CONHRa₁, Ra₁ étant choisi parmi les groupes (C₁-C₅)alkyles et les cycles aromatiques ) ou tertiaire (-CONRa₁Ra₂, Ra₁ et Ra₂ identiques ou différents peuvent être chacun indépendamment l'un de l'autre un groupe (C₁-C₅)alkyle ou un cycle aromatique.

Le terme (C₁-C₁₈)alkyle signifie toute chaîne carbonée linéaire ou ramifiée ayant de 1 à 18 atomes de carbone et inclut tous les groups alkyles ayant 1 à 18 atomes de carbone comme par exemple les groupes méthyle, éthyle, n-propyle, isopropyle, n-butyle, isobutyle, tert-butyle, neopentyle, isopentyle, hexyle, heptyle, octyle, nonyle, décyle, undécyle, dodécyle, tridécyle, tétradécyle, pentadécyle, hexadécyle, heptadécyle et octadécyle. De préférence, le groupe des (C₁-C₁₈)alkyle comprend des chaines de 1 à 8 atomes de carbone ou groupe (C₁-C₅)alkyle en particulier les groupes méthyle, éthyle, n-propyle, isopropyle, n-butyle, isobutyle, tert-butyle, neopentyle, isopentyle, hexyle, heptyle, octyle, de préférence encore des chaines de 1 à 5 atomes de carbone ou (C₁-C₅)alkyle comme par exemple les groupes méthyle, éthyle, n-propyle, isopropyle, n-butyle, isobutyle, tert-butyle, neopentyle, isopentyle et de manière d'avantage préférée des chaines de 1 à 3 atomes de carbone ou (C₁-C₃)alkyle, en particulier les groupes méthyle, éthyle, n-propyle et isopropyle.

Le terme (C₁-C₅)alkyle signifie toute chaîne carbonée linéaire ou ramifiée ayant de 1 à 5 atomes de carbone et inclut tous les groups alkyles ayant 1, 2, 3, 4 ou 5 atomes de carbone, en particulier les groupes méthyle, éthyle, n-propyle, isopropyle, n-butyle, isobutyle, tert-butyle, neopentyle et isopentyle.

Le terme (C₁-C₅)alkoxy est un groupe O-(C₁-C₅)alkyle où le groupe (C₁-C₅)alkyle est tel que défini précédemment. On peut citer à titre d'exemple les groupes méthoxy, éthoxy, butoxy et pentoxy.

De manière préférée, R ou R' représente chacun indépendamment l'un de l'autre un atome d'hydrogène, un atome de fluor, un groupement méthoxy ou un groupement acétoxy.

Selon l'invention, R et R' peuvent être différents d'un atome d'hydrogène.

De manière encore d'avantage préférée, R et R' représentent un atome de fluor, un groupement méthoxy ou un groupement acétoxy.

Comme décrit précédemment, à la différence des procédés de l'état de l'art dans lesquels le ou les groupements fonctionnels sont introduits uniquement en bout de chaîne polymère, le ou les groupement(s) fonctionnel(s) est (sont) introduit(s) au sein de la chaîne polymère. Ainsi, le procédé selon l'invention permet d'introduire le ou les groupement(s) fonctionnel(s) au sein de la chaîne polymère, et ainsi d'obtenir des polymères fonctionnalisés de formule 3 et/ou 3'.

La formule 4 illustre la structure chimique générale d'un élastomère.

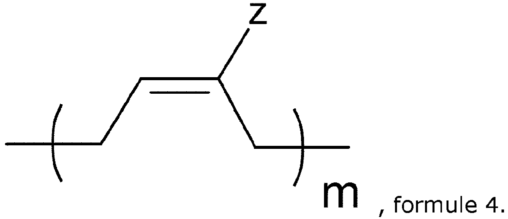

Selon un troisième aspect de l'invention, il est proposé une utilisation d'élastomères fonctionnalisés selon le deuxième aspect de l'invention comme matériaux.

De préférence, il est proposé l'utilisation d'élastomères fonctionnalisés selon le deuxième aspect de l'invention comme matériaux élastomères, élastomères thermoplastiques ou élastomères pour le biomédical.

Selon un quatrième aspect de l'invention, il est proposé des compositions de polymères susceptibles d'être obtenues par le procédé selon le premier ou le second aspect de l'invention. Le procédé selon l'invention permet d'obtenir des compositions de polymères. Lesdites compositions de polymères peuvent être constituées d'oligomères ou d'un mélange comprenant des polymères et des oligomères. La composition de polymères est fonction des déchets soumis au procédé de dévulcanisation selon l'invention. La composition de polymère comprend des élastomères lorsque les déchets comprennent des élastomères.

Selon un cinquième aspect de l'invention, il est proposé une utilisation des compositions de polymères obtenues selon le quatrième aspect de l'invention comme additif à des mélanges d'élastomères frais ou neufs, comme additifs ou réactifs de type agents tensioactifs, agents réticulants ou extenseurs de chaîne.

Il est également proposé une utilisation des compositions de polymères obtenues selon le quatrième aspect de l'invention comme matériaux, en particulier comme élastomères thermoplastiques ou élastomères dans le domaine du biomédical.

### Description des modes de réalisation

Selon les modes de réalisation présentés, le procédé de dévulcanisation est mis en œuvre à partir de granulats ou poudrettes de déchets pneumatiques de camion. La réaction bilan du procédé de dévulcanisation chimique par rupture des ponts disulfures au moyen d'un agent de dévulcanisation est présentée dans les schémas réactionnels 1 et 1' ci-dessous.

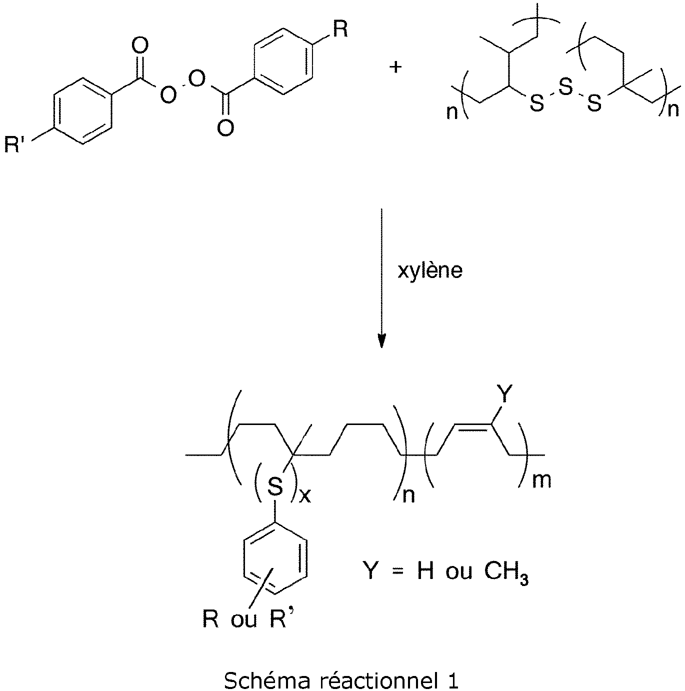

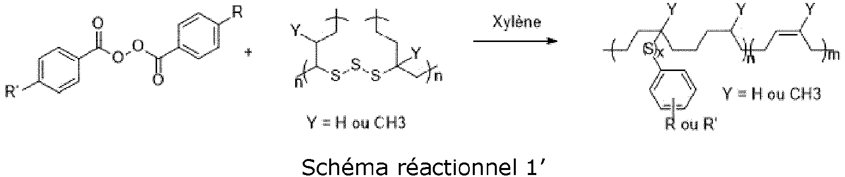

Ce procédé de dévulcanisation constitue donc une voie de synthèse de polymères à partir de déchets pneumatiques. Le type de polymère synthétisé, en termes de longueur de chaînes, est principalement régit par le degré de polymérisation des élastomères contenus dans les déchets à partir duquel le procédé est mis en œuvre. Selon les modes de réalisation décrits, les déchets contenant des élastomères à partir duquel le procédé est mis en œuvre proviennent de déchets pneumatiques de camion. En fonction des paramètres utilisés pour la mise en œuvre du procédé, la synthèse engendre l'obtention d'oligomères ou d'un mélange comprenant des polymères et des oligomères. Les polymères obtenus selon le schéma réactionnel 1 comprennent un nombre, noté n, de motifs, comprenant chacun un groupement fonctionnel ayant été introduit le long de la chaîne polymère lors de la dévulcanisation, qui est compris entre 6 et 600, un nombre d'atomes de soufre, noté x, reliant le groupement fonctionnel à la chaîne polymère qui compris entre 0 et 6, et un nombre, noté m, de monomères que comprend le polymère qui est compris entre 6 et 600.

Les déchets pneumatiques de camion sont connus pour être hautement vulcanisés. L'agent de dévulcanisation, est introduit à hauteur de 6% en masse par rapport aux déchets de caoutchouc. L'homme du métier désigne ce rapport par « phr » comme étant de 6 parties d'AD pour 100 parties de déchets de caoutchouc en masse, « phr » pour « per hundred rubber ». La masse de déchets initiaux, lors de la mise en œuvre de chacun des modes de réalisation présentés, est de 300 mg.

Selon l'invention, lorsque la mise en œuvre du procédé de synthèse est terminée, une étape supplémentaire visant à récupérer les polymères synthétisés est mise en œuvre : elle consiste à traiter par Soxhlet à l'acétone les déchets dévulcanisés pendant 24h pour récupérer les polymères fonctionnalisés. Lorsque les polymères synthétisés sont en suspension et/ou solvatés, l'homme du métier sera apte à choisir le procédé chimique de séparation ou d'extraction le plus adapté pour les récupérer.

Le taux de dévulcanisation, noté TDV dans la suite de la description, obtenu après mise en œuvre du procédé, est déterminé par le principe de Flory au travers de la variation de la densité de réticulation selon le procédé décrit par Paul J. Flory and John Rehner, The Journal of Chemical Physics, 1943, vol.11, pp.521. Il permet donc la mesure spécifique des ruptures des ponts disulfures et des liaisons carbone-soufre. La valeur du TDV permettra donc d'évaluer spécifiquement l'efficacité de la réaction de dévulcanisation. Dans les documents de l'état de l'art, le TDV est généralement déterminé à partir de mesures sol-gel, en général au moyen d'un procédé d'extraction Soxhlet, et en particulier à partir de la fraction soluble du polymère dévulcanisé. La fraction soluble déterminée comprend les ruptures des ponts disulfures et des liaisons carbone-soufre mais également les ruptures des liaisons carbone-carbone de la chaine polymère.

Partant du constat que le caoutchouc est constitué principalement de polyisoprène et que les doubles liaisons carbone-carbone sont également sensibles aux radicaux libres, les inventeurs ont déduit que la principale source de dépolymérisation est celle qui est engendrée par la réaction de l'AD sur les doubles liaisons carbone-carbone du polyisoprène. Aussi, afin d'évaluer précisément la sélectivité du procédé selon l'invention, le taux de fonctionnalisation, noté TDF dans la suite de la description, du polyisoprène contenu dans les déchets pneumatiques a été étudié en parallèle dans des conditions identiques à celles utilisées lors de la mise en œuvre du procédé. Le polyisoprène choisi pour déterminer le TDF présente un degré de polymérisation équivalent à celui des déchets pneumatiques de camion utilisés. La valeur du TDF permettra donc d'évaluer précisément la spécificité de la réaction de dévulcanisation vis à vis des ponts disulfures et des liaisons carbone-soufre. Un procédé permettant d'obtenir un TDF inférieur à 30% sera considéré comme présentant une sélectivité acceptable. La réaction bilan de dépolymérisation du polyisoprène par réaction de l'agent dévulcanisant sur les doubles liaisons carbone-carbone du polyisoprène ou polybutadiène est présentée par le schéma réactionnel 2 ci-dessous. 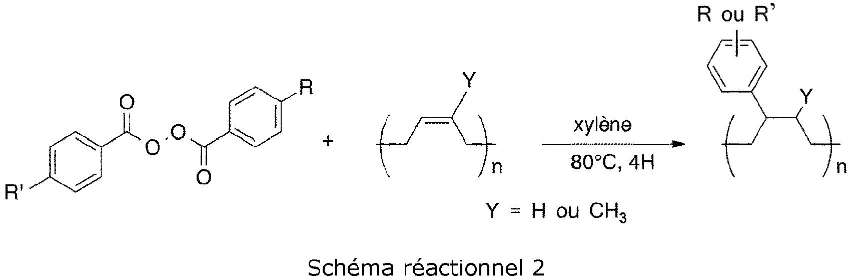 La réaction bilan de dépolymérisation du polyisoprène par réaction de l'agent dévulcanisant sur les doubles liaisons carbone-carbone du polyisoprène ou polybutadiène peut être complétée par le schéma réactionnel 3 ci-dessous.

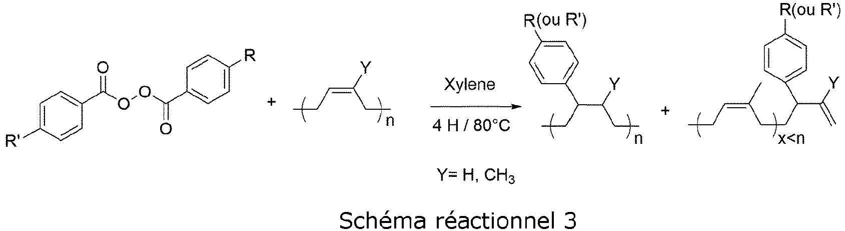

Selon un premier mode de réalisation, le procédé de synthèse d'oligomères par dévulcanisation est mis en œuvre sous air et l'AD est le peroxyde de benzoyle de formule 1a, qui correspond au composé de formule 1 dans lequel R et R' sont des atomes d'hydrogène,

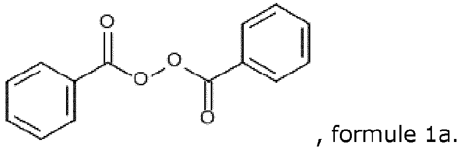

Le solvant utilisé est du xylène.

Le tableau 1 illustre l'effet de la température sur le procédé selon le premier mode de réalisation. On remarque qu'un passage d'une température de 80°C à une température de 100°C engendre une multiplication par un facteur deux du TDV mais une multiplication par un facteur douze du TDF. Cela démontre que la réaction de dépolymérisation est importante au-delà de 80°C.

**Tableau 1**

| Volume de xylène (ml) | Temps (heures) | Température (°C) | TDV | TDF |
|---|---|---|---|---|
| 25 | 4 | 80 | 31,5% | 7% |
| 25 | 4 | 100 | 69,3% | 83% |

Le tableau 2 illustre l'effet du temps sur le procédé selon le premier mode de réalisation. Le tableau 2 montre que le TDV croît pour atteindre un maximum à un temps de réaction de 4 heures puis décroît lentement. De son côté, le TDF est relativement stable et faible. Il passe de 5% pour des temps de réaction de deux et trois heures à 7% pour des temps de réaction de quatre et cinq heures.

**Tableau 2**

| Volume de xylène (ml) | Temps (heures) | Température (°C) | TDV | TDF |
|---|---|---|---|---|
| 25 | 2 | 80 | 17,4% | 5% |
| 25 | 3 | 80 | 26% | 5% |
| 25 | 4 | 80 | 31,5% | 7% |
| 25 | 5 | 80 | 30,5% | 7% |

Le tableau 3 illustre l'effet de la concentration en AD sur le procédé selon le premier mode de réalisation. Pour une concentration de 0,24 phr par millilitre de solvant, c'est-à-dire une quantité de 6% en masse d'AD dans un volume de solvant de 25 ml, le TDV est relativement faible et le TDF est de 5%. Pour une concentration de 0,6phr/ml de solvant en AD, c'est-à-dire une quantité de 6% en masse d'AD dans un volume de solvant de 10 ml concentration considérée comme forte, le TDV est de 61,3% et le TDF de 82%. Pour une concentration de 0,06phr/ml de solvant en AD, c'est-à-dire une quantité de 6% en masse d'AD dans un volume de solvant de 100 ml, considérée comme une faible concentration, le TDV est de 61,2% et le TDF de 18%. De manière surprenante, pour une même durée de mise en œuvre du procédé, le TDV obtenu pour une forte concentration en AD est similaire à celui obtenu pour une faible concentration en AD. La valeur élevée du TDF observée lors de la mise en œuvre du procédé avec une forte concentration en AD confirme la présence d'une réaction secondaire de dépolymérisation. Il est bon de noter que même si la sélectivité est faible lors de l'utilisation de forte concentration en AD, le TDV obtenu pour des déchets hautement vulcanisés tels que les déchets pneumatiques de camion, présentant une densité de réticulation de 13,5.10⁻⁴mol/ml, est au moins égal, voire supérieur, à celui obtenu pour des caoutchouc présentant des densité de réticulation, typiquement 2,6.10⁻⁴mol/ml, nettement inférieures. On observe que pour des faibles concentrations en AD, le procédé permet d'obtenir de bonnes valeurs du TDV et présente une très bonne sélectivité, 18% de TDF.

**Tableau 3**

| Volume de xylène (ml) | Temps (heures) | Température (°C) | TDV | TDF |
|---|---|---|---|---|
| 25 | 4 | 80 | 31,5% | 5% |
| 10 | 4 | 80 | 61,3% | 82% |
| 100 | 4 | 80 | 61,2% | 18% |

Selon un second mode de réalisation, le procédé est réalisé sous atmosphère inerte, sous argon, l'AD est le peroxyde de benzoyle de formule 1a et le solvant utilisé est du xylène

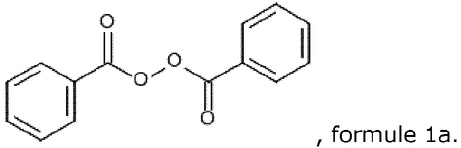

Le tableau 4 illustre l'effet de l'atmosphère inerte sur le TDV selon le second mode de réalisation. Le TDV est multiplié par un facteur deux comparé au procédé réalisé dans les mêmes conditions sous air. En revanche, le TDF est également multiplié par un facteur deux mais garde une valeur faible. Ainsi, lorsqu'une sélectivité optimale est recherchée, la mise en œuvre du procédé sous air est à privilégier alors que lorsqu'une efficacité de dévulcanisation optimale est recherchée, la mise en œuvre du procédé sous argon est à privilégier.

**Tableau 4**

| Atmosphère | Volume de xylène (ml) | Temps (heures) | Température (°C) | TDV | TDF |
|---|---|---|---|---|---|
| Sous air | 25 | 4 | 80 | 31,5% | 5% |
| Sous argon | 25 | 4 | 80 | 67,3% | 14% |

Le tableau 5 illustre l'effet du temps sur le procédé selon le second mode de réalisation. Le tableau 5 montre que le TDV croît pour atteindre un maximum à un temps de réaction de 3 heures puis décroît rapidement. De son côté, le TDF croît avec le temps. Il passe de 10% pour des temps de réaction de deux et trois heures à 14% puis 16% pour des temps de réaction de quatre et cinq heures.

**Tableau 5**

| Volume dexylène (ml) | Temps (heures) | Température (°C) | TDV | TDF |
|---|---|---|---|---|
| | | | | |
| 25 | 2 | 80 | 60% | 10% |
| 25 | 3 | 80 | 70% | 10% |
| 25 | 4 | 80 | 67,3% | 14% |
| 25 | 5 | 80 | 55% | 16% |

Le tableau 6 illustre l'effet de la concentration en AD sur le procédé selon le second mode de réalisation. On observe qu'une diminution de la concentration en AD entraine une diminution du TDV et une augmentation du TDF. Aussi, contrairement à la mise en œuvre du procédé sous air, les valeurs de concentration en AD supérieures à 0,06phr/ml de solvant sont à privilégier lorsque le procédé est mis en œuvre sous argon. Cela indique que lorsque le procédé est mis en œuvre sous argon, en plus des réactions de dévulcanisation et de dépolymérisation radicalaire, une réaction supplémentaire apparait. Il peut par exemple s'agir d'une réticulation des radicaux soufrés sur des ponts disulfures et/ou des doubles liaisons de la chaine polymère.

On remarque également que la mise en œuvre du procédé selon le second mode de réalisation pour des valeurs de concentration en AD supérieures à 0,06phr/ml de solvant engendre des valeurs de TDV et de TDF équivalentes, voire légèrement meilleures, à celles obtenues lorsque le procédé est mis en œuvre selon le premier mode de réalisation pour des valeurs de concentration en AD inférieures à 0,2 phr/ml de solvant.

**Tableau 6**

| Atmosphère | Volume de xylène (ml) | Temps (heures) | Température (°C) | TDV | TDF |
|---|---|---|---|---|---|
| Sous argon | 25 | 4 | 80 | 67,3% | 14% |
| Sous argon | 100 | 4 | 80 | 59,3% | 20% |
| Sous air | 100 | 4 | 80 | 61,2% | 18% |

Selon un mode de réalisation particulier du procédé selon l'invention, une étape d'activation des granulats de déchets pneumatiques est mise en œuvre préalablement à la réaction de dévulcanisation.

Selon une première variante, l'activation comprend une étape de gonflement des granulats. Le tableau 7 illustre l'influence du type de solvant sur le taux de gonflement des granulats et sur la partie des granulats qui ont été solubilisés par le solvant. Cette étape de gonflement consiste à introduire une quantité donnée de granulats de déchets pneumatiques dans un solvant pendant un temps donné et à récupérer la partie des déchets pneumatiques qui a été solubilisée par le solvant. Les expériences ont chacune été réalisées trois fois et la moyenne calculée a été reportée dans le tableau 7. Le tableau 7 montre que les solvants polaires, acétone (moment dipolaire µ=2,86Debye), ne sont pas efficaces, la partie solubilisée des déchets est très faible et le taux de gonflement est également très faible. Les solvants apolaires, pentane (moment dipolaire µ=0,2D), sont peu efficaces. En revanche, les solvants peu polaires, dichlorométhane (DCM) (moment dipolaire µ=1,55D) et le tetrahydrofurane (THF) (moment dipolaire µ=1,75D), montrent une très bonne efficacité de solubilisation des déchets et de gonflement des déchets. C'est en particulier le cas lorsque l'expérience est réalisée via un extracteur de type Soxhlet. De manière générale, il est considéré qu'un solvant apolaire présente un moment polaire inférieur à 0,5D et qu'un solvant polaire présente un moment dipolaire supérieur à 2D voire 2,5D. En ce qui concerne l'aspect protique ou aprotique du solvant, il semblerait que les solvants protiques présentent la plus faible efficacité. En effet, lorsqu'on qu'on compare l'éthanol (µ=1,74D) qui présente un moment dipolaire égal à celui du THF et inférieur à celui de l'acétone, il engendre le plus faible taux de gonflement et la plus faible solubilisation des déchets.

**Tableau 7**

| Solvant | Temps | Conditions | Taux de gonflement | Partie soluble |
|---|---|---|---|---|
| DCM | 2h30 | 20ml | 128% | 6,4% |
| DCM | 2h30 | Soxhlet | 131% | 8,4% |
| DCM | 24h | 20ml | 131% | 9,8% |
| THF | 24h | 20ml | 126% | 10,7% |
| Acétone | 2h30 | 20ml | 12% | 4,9% |
| Ethanol | 2h30 | 20ml | 5% | 2,3% |
| Pentane | 2h30 | 20ml | 49% | 7,7% |

Selon une deuxième variante, l'activation comprend une étape de lyophilisation des granulats. Les granulats sont gonflés dans le DCM pendant 24h selon le procédé décrit dans la première variante Puis, un échange de solvant DCM-éthanol puis éthanol-eau est réalisé. Les granulats gonflés à l'eau sont ensuite congelés et lyophilisés pendant 48h.

Le tableau 8 illustre l'effet de l'activation par lyophilisation sur la dévulcanisation des granulats de déchets pneumatiques.

Lorsque le procédé est mis en œuvre sous air à partir de granulats lyophilisés, le TDV est nettement supérieur à celui obtenu avec des granulats n'ayant pas subi d'activation. Le TDF reste inchangé et faible.

Lorsque le procédé est mis en œuvre sous argon à partir de granulats lyophilisés, le TDV diminue significativement alors que le TDF reste constant. Cela indique que la réticulation radicalaire qui apparait lors de la mise en œuvre du procédé sous argon est exacerbée lorsque les déchets pneumatiques sont lyophilisés. De plus, lorsque la concentration en AD diminue, de 0,24phr/ml de solvant à 0,06phr/ml de solvant, le TDV diminue et le TDF augmente. Cela confirme encore les résultats ci-dessus et ceux présentés dans le tableau 6 selon lequel la réticulation radicalaire est amplifiée lorsque la concentration en AD diminue.

**Tableau 8**

| Type de déchets | Atmosphère | Volume de xylène (ml) | Temps (heures) | Température (°C) | TDV | TDF |
|---|---|---|---|---|---|---|
| Granulats | Sous air | 25 | 4 | 80 | 31,5% | 7% |
| Granulats lyophilisés | Sous air | 25 | 4 | 80 | 53,1% | 7% |
| Granulats | Sous argon | 25 | 4 | 80 | 67,3% | 14% |
| Granulats lyophilisés | Sous argon | 25 | 4 | 80 | 55,8% | 14% |
| Granulats lyophilisés | Sous argon | 100 | 4 | 80 | 48% | 20% |
| Granulats | Sous argon | 100 | 4 | 80 | 59,3% | 20% |

Selon une troisième variante, l'activation comprend une étape de gonflement des granulats dans un liquide ionique, le chlorure de trihexyltétradécylphosphonium, connu sous l'appellation commerciale « Cyphos 101 » pendant 12 heures.

Le tableau 9 illustre l'effet de la mise en œuvre du procédé sous air à partir des granulats ayant subi une étape de gonflement dans le liquide ionique. Comparé au TDV et TDF obtenus en l'absence d'activation, on observe une augmentation d'un facteur deux du TDV et une nette augmentation du TDF. Comparé aux TDV et TDF obtenus lors de l'activation par lyophilisation, on observe une sensible augmentation du TDV et une nette augmentation du TDF

**Tableau 9**

| Type de déchets | Volume de xylène (ml) | Temps (heures) | Température (°C) | TDV | TDF |
|---|---|---|---|---|---|
| Granulats gonflés dans liquide ionique | 25 | 4 | 80 | 55,8% | 30% |
| Granulats | 25 | 4 | 80 | 31,5% | 7% |
| Granulats lyophilisés | 25 | 4 | 80 | 53,1% | 7% |

Selon une quatrième variante, l'activation comprend une étape de gonflement des granulats par traitement au CO₂ supercritique (ScCO₂). L'étape d'activation consiste à traiter les granulats par gonflement dans l'éthanol ou l'acétone, puis à réaliser un échange de solvant entre l'éthanol, ou l'acétone, et le scCO₂ dans un déshydrateur. Les résultats de la synthèse de polymères par dévulcanisation mise en œuvre à partir de granulats gonflés par traitement au ScCO₂ sont présentés dans le tableau 10.

**Tableau 10**

| Type de déchets | Volume de xylène (ml) | Temps (heures) | Température (°C) | TDV | TDF |
|---|---|---|---|---|---|
| Granulats gonflés par traitement au ScCO₂ | 25 | 4 | 80 | 27% | 7% |

Selon un autre mode de réalisation du procédé selon l'invention, l'agent de dévulcanisation utilisé répond à la formule 1 dans laquelle R et R' sont différents d'un atome d'hydrogène. Ces ADs sont donc des dérivés du peroxyde de benzoyle (BPO). L'utilisation de tels dérivés permet de synthétiser par dévulcanisation de déchets de caoutchouc des oligomères fonctionnalisés selon la formule 3 et/ou 3'. Outre le fait que les oligomères synthétisés proviennent de déchets de caoutchouc, le fait qu'ils soient fonctionnalisés constitue un avantage supplémentaire en vue de leur utilisation subséquente. En effet, le fait que le groupement fonctionnel puisse comporter un large choix de substituants R, R' tels que proposés selon l'invention, l'utilisation subséquente en est facilité et les domaines techniques d'applications potentiels sont élargis. De manière avantageuse, les dérivés du PBO utilisés sont ceux répondant à la formule 1 dans laquelle R et R' sont identiques et sont en position para par rapport au groupement peroxyde. Dans un mode de réalisation d'avantage préféré, les dérivés répondent aux formules 1b, 1c et 1d. Le composé de formule 1b comporte deux atomes de fluor comme substituant R et R' qui exercent un effet de type inductif attracteur sur le cycle aromatique auquel ils sont liés. Le composé de formule 1c comporte deux groupes méthoxy (-OCH₃) comme substituant R et R' qui exercent un effet de type mésomère donneur sur le cycle aromatique auquel ils sont liés. Le composé de formule 1d comporte des groupes acétoxy (-C(=O)OCH₃) comme substituant R et R' qui exercent un effet de type mésomère attracteur sur le cycle aromatique auquel ils sont liés.

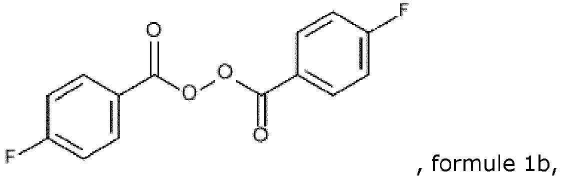

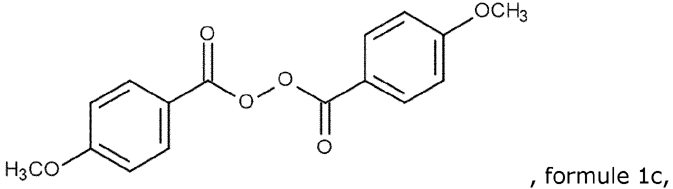

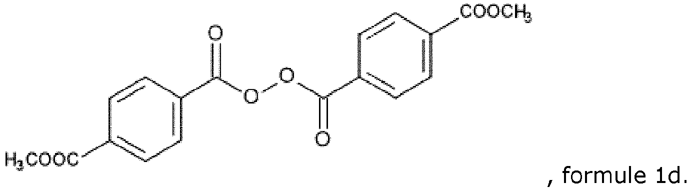

Le procédé a été réalisé sous air à partir de granulats de déchets pneumatiques de camion n'ayant pas subi d'activation. L'effet des différents substituants R et R' est illustré dans le tableau 11. Chacun des dérivés du BPO (1b, 1c et 1d) engendre une nette amélioration du TDV. Les composés 1b et 1d engendrent une amélioration du TDV d'un facteur deux. Les composés 1b et 1c engendrent également une augmentation notable du TDF mais qui reste inférieure à 30%. Le composé 1d en revanche engendre une diminution du TDF à 2% et rend par conséquent le procédé hautement sélectif. De manière surprenante, que le cycle aromatique voit sa densité électronique augmentée par l'effet des substituants exerçant un effet donneur ou qu'il voit sa densité électronique appauvrie par l'effet des substituants exerçant un effet attracteur, le TDV reste nettement augmenté avec les dérivés substitués du BPO comprenant des substituants R et R' donneurs ou attracteurs.

Cela permet donc d'envisager la synthèse d'une grande variété d'oligomères fonctionnalisés. Les résultats obtenus lorsque le composé 1d est utilisé lors de la mise en œuvre du procédé sont particulièrement intéressants en termes de sélectivité et de TDV.

**Tableau 11**

| Agent de dévulcanisation | Volume de xylène (ml) | Temps (heures) | Température (°C) | TDV | TDF |
|---|---|---|---|---|---|
| 1a | 25 | 4 | 80 | 31,5% | 7% |
| 1b | 25 | 4 | 80 | 57,9% | 27% |
| 1c | 25 | 4 | 80 | 50,2% | 27% |
| 1d | 25 | 4 | 80 | 60,4% | 2% |

Selon ce mode de réalisation, d'autres dérivés du peroxyde de benzoyle (BPO) ont été utilisés comme ADs. Ces composés sont notés 1e, 1f, 1g et 1h. Le composé 1e comporte deux groupements méthyle (-CH₃) comme substituant R et R' qui exercent un effet de type inductif donneur sur le cycle aromatique auquel ils sont liés. Le composé 1f comporte deux groupements nitro (-NO₂) comme substituant R et R' qui exercent un effet de type mésomère attracteur sur le cycle aromatique auquel ils sont liés. Le composé 1g comporte deux atomes de chlore en position ortho comme substituant R et R' qui exercent un effet de type inductif attracteur sur le cycle aromatique auquel ils sont liés. Le composé 1h comporte deux atomes de Brome comme substituant R et R' qui exercent un effet de type inductif attracteur sur le cycle aromatique auquel ils sont liés.

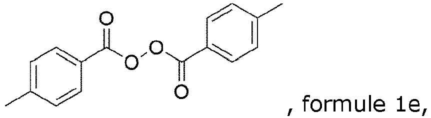

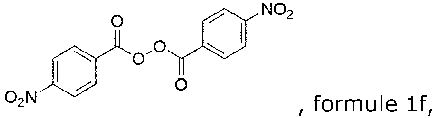

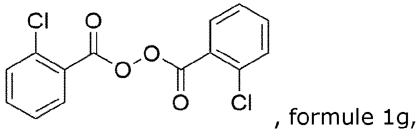

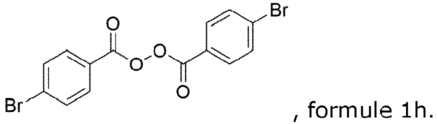

Le procédé a été réalisé sous air à partir de granulats de déchets pneumatiques de camion n'ayant pas subi d'activation. L'effet des différents substituants R et R' est illustré dans le tableau 12. Tous les dérivés du BPO présentés engendrent une nette amélioration du TDV. Les composés 1e, 1g et 1h engendrent une amélioration du TDV supérieure à un facteur deux. Le composé 1f engendre également une augmentation notable du TDF mais qui reste inférieure à 30%. Les composés 1f et 1h engendrent également une diminution du TDF de 6% et 3% respectivement et rend par conséquent le procédé hautement sélectif. Ici encore, que le cycle aromatique voit sa densité électronique augmentée par l'effet des substituants exerçant un effet donneur ou qu'il voit sa densité électronique appauvrie par l'effet des substituants exerçant un effet attracteur, le TDV reste nettement augmenté avec les dérivés substitués du BPO comprenant des substituants R et R' donneurs ou attracteurs.
En ce qui concerne le composé 1g, il est à noter que pour obtenir des taux TDV équivalent aux autres composés présentés (1b, 1c, 1d, 1e, 1f et 1h), un temps de réaction de trois heures a été choisi. Un temps de réaction de 4h aboutit à un TDV équivalent à celui obtenu avec le composé 1a et à une augmentation substantielle du TDF.

Ces résultats confirment la possibilité d'envisager la synthèse d'une grande variété d'oligomères fonctionnalisés. Les résultats obtenus lorsque les composés 1f et 1h sont utilisés lors de la mise en œuvre du procédé sont particulièrement intéressants en termes de sélectivité et de TDV. Les résultats obtenus lorsque les composés 1e et 1h sont utilisés lors de la mise en œuvre du procédé sont particulièrement intéressants en termes TDV. Les composés 1d et 1h paraissent tout particulièrement intéressants tant le TDV qu'ils permettent d'obtenir est élevé et le TDF est faible (réaction sélective, c'est à dire peu de dépolymérisation).

**Tableau 12**

| Agent de dévulcanisation | Volume de xylène (ml) | Temps (heures) | Température (°C) | TDV | TDF |
|---|---|---|---|---|---|
| 1e | 25 | 4 | 80 | 65,2% | 12% |
| 1f | 25 | 4 | 80 | 52,1% | 6% |
| 1g | 25 | 3 | 80 | 60,6% | 14,8% |
| 1h | 25 | 4 | 80 | 62,2% | 3% |

Selon un troisième mode de réalisation, le solvant utilisé lors de la mise en œuvre du procédé est le chlorure de trihexyltétradécylphosphonium, liquide ionique commercialisé sous le nom de « Cyphos 101 », l'AD utilisé est le peroxyde de benzoyle de formule 1a. et le procédé est réalisé sous air ou sous atmosphère inerte. L'utilisation d'un liquide ionique comme solvant engendre automatiquement la mise en œuvre du gonflement des déchets, concomitamment à la dévulcanisation. Cela permet d'augmenter le TDV comme discuté précédemment. En outre, l'utilisation d'un liquide ionique comme solvant engendre de fait la précipitation des oligomères fonctionnalisés synthétisés. Dès lors le procédé peut être mis en œuvre en continu et ne nécessite plus d'étape d'extraction subséquente à la mise en œuvre de la dévulcanisation.

Selon le troisième mode de réalisation, des expériences supplémentaires ont été réalisées pour illustrer l'effet du solvant. Le TDV et le TDF ont été mesurés après la mise en œuvre du procédé dans un solvant eutectique, le chlorure de choline/urée, noté 2a, et dans des liquides ioniques, respectivement dans le « Cyphos 101 », noté 2b, et dans du Bromure de dioctylimidazolium ([DOIM][BR]), noté 2c. Le procédé a été réalisé sous air à partir de granulats de déchets pneumatiques de camion n'ayant pas subi d'activation préalable. Le BPO a été utilisé comme AD. Les résultats sont reportés dans le tableau 13.

Dans le cas du « Cyphos 101 », l'extraction des produits de la réaction de dévulcanisation n'a pas été suffisante pour déterminer le TDF. En comparant ces résultats avec ceux obtenus avec le composé 1a (BPO) du tableau 11, on remarque que le TDV est considérablement augmenté lorsque des liquides ioniques ou solvants eutectiques sont utilisés. On remarque également, en contrepartie, une légère augmentation du TDF lorsqu'un solvant eutectique est utilisé et une augmentation conséquente lorsqu'un liquide ionique est utilisé.

**Tableau 13**

| Solvant | Volume de solvant (ml) | Temps (heures) | Température (°C) | TDV | TDF |
|---|---|---|---|---|---|
| 2a | 25 | 4 | 80 | 54,2% | 10% |
| 2b | 25 | 4 | 80 | 45,6% | - |
| 2c | 25 | 4 | 80 | 53,7% | 21% |

Les résultats présentés ci-dessus démontrent que le procédé de synthèse de polymères par dévulcanisation selon l'invention permet, entre autre, d'obtenir des polymères fonctionnalisés pouvant contenir un grand nombre de substituants différents, des taux de dépolymérisation inférieurs à ceux obtenus par l'intermédiaire des procédés habituellement utilisés et des taux de dévulcanisation supérieurs à ceux obtenus par l'intermédiaire des procédés habituellement utilisés.

## Revendications

1. Procédé de synthèse de polymères par dévulcanisation à partir de déchets contenant des élastomères, ledit procédé comprenant :
- a) la mise en contact desdits déchets contenant des élastomères avec un solvant en présence d'un agent de dévulcanisation de nœuds de réticulation qui comprennent un atome de soufre lié à un autre atome de soufre ou à un atome de carbone,
- b) le chauffage du mélange obtenu à l'étape a), à une température comprise entre 20°C et à 250°C pendant une durée comprise entre 15 minutes et 24 heures,
ledit procédé étant **caractérisé en ce que** :
- l'agent de dévulcanisation est un composé selon la formule (1) 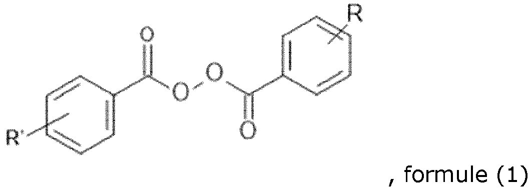 dans lequel R et R' sont identiques ou différents et représentent chacun, indépendamment l'un de l'autre, un substituant exerçant un effet mésomère donneur ou un effet mésomère attracteur ou un effet inductif donneur ou un effet inductif attracteur, R et R' sont choisis indépendamment l'un de l'autre dans le groupe comprenant l'hydrogène (-H), les atomes d'halogène choisi parmi l'iode, le brome, le fluor et le chlore, le groupe des (C₁-₁₈)alkyles, les amines primaire (-NH₂), secondaire (-NHRa₁ Ra₁ étant choisi parmi les groupes (C₁-C₅)alkyles et les cycles aromatiques) ou tertiaire (-NRa₁Ra₂, où Ra₁ et Ra2 identiques ou différents peuvent être chacun indépendamment l'un de l'autre un groupe (C₁-C₅)alkyle ou un cycle aromatique), l'hydroxyle (-OH), les alcoolates (ou un sel) (Ra₁-O⁻, Ra₁ étant choisi parmi les groupes (C₁-C₅)alkyles et les cycles aromatiques), les groupes (C₁-C₅)alkoxy, un thiol (-SH), les thioéther (-SRa₁, Ra₁ étant choisi parmi les groupes (C₁-C₅)alkyles et les cycles aromatiques), un thiolate (ou un sel) (Ra_{1\}-S⁻), Ra₁ étant choisi parmi les groupes (C₁-C₅)alkyle et les cycles aromatiques), un cycle aromatique, une base conjuguée d'un acide carboxylique (-COO⁻), un groupe carboxylique (-COOH), les esters (-CO₂ Ra₁, Ra₁ étant choisi parmi les groupes (C₁-C₅)alkyles et les hétérocycles), un groupe aldéhyde (-CHO), un carbonyle (-COR), un groupe nitro (-NO₂), un groupe nitrile (-CN), un groupe sulfonyle (-SO₂-), un groupe sulfonate (sel ou acide)(-SO₃), un sulfone (-SO₂R), un groupe phosphate -O-PO(ORa₁)(ORa₂) où Ra₁ et Ra₂ identiques ou différents peuvent être chacun indépendamment l'un de l'autre un groupe hydrogène ou (C₁-C₅)alkyle ou un cycle aromatique), un groupe amide primaire (-CONH₂), secondaire (-CONHRa₁, Ra₁ étant choisi parmi les groupes (C₁-C₅)alkyles et les cycles aromatiques ) ou tertiaire (-CONRa₁Ra₂, Ra₁ et Ra₂ identiques ou différents peuvent être chacun indépendamment l'un de l'autre un groupe (C₁-C₅)alkyle ou un cycle aromatique)) et R, R' ou les deux sont différents d'un atome d'hydrogène.

2. Procédé selon la revendication 1, dans lequel la concentration en agent de dévulcanisation, est telle que le rapport entre ladite concentration en agent de dévulcanisation, exprimée en partie pour cent d'élastomère (phr), et un volume de solvant, exprimé en ml, soit :
- supérieure à 0,3 phr/ml de solvant ou inférieure à 0,2 phr/ml de solvant lorsque le procédé est réalisé sous air,
- supérieure à 0,06phr/ml de solvant lorsque le procédé est réalisé sous atmosphère inerte.

3. Procédé selon la revendication 1 ou 2, dans lequel le solvant est un solvant organique ou un liquide ionique ou un solvant eutectique profond ou leur mélange.

4. Procédé selon l'une quelconque des revendications 1 à 3, **caractérisé en ce que** la durée de chauffage du mélange est comprise entre 2 heures et 4 heures lorsque le procédé est réalisé sous atmosphère inerte.

5. Procédé selon l'une quelconque des revendications 1 à 3, dans lequel la durée de chauffage du mélange est comprise entre 3 heures et 5 heures lorsque le procédé est réalisé sous air.

6. Procédé selon l'une quelconque des revendications 1 à 5, **caractérisé en ce qu'**il comprend, préalablement à l'étape a), une étape d'activation des déchets contenant des élastomères par lyophilisation ou par gonflement.

7. Procédé selon la revendication 6, dans lequel la réaction de dévulcanisation et l'étape d'activation des déchets contenant des élastomères sont mises en œuvre en continu.

8. Procédé selon l'une quelconque des revendications 1 à 7, **caractérisé en ce que** la synthèse des polymères par dévulcanisation est réalisée à partir de déchets d'élastomères hautement vulcanisés.

9. Elastomère fonctionnalisé selon la formule 3 ou 3', 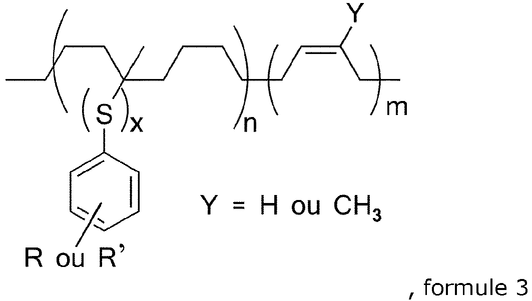 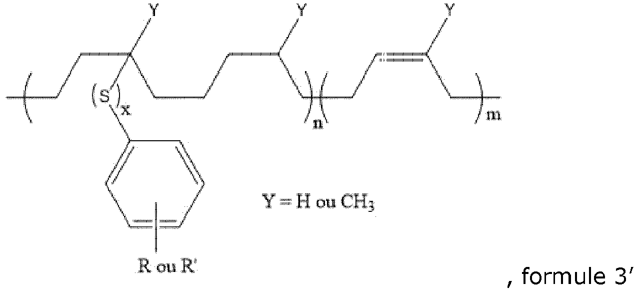
dans lequel x est un nombre entier compris entre 0 et 6, n est un nombre entier compris entre 6 et 600, m est un nombre entier compris entre 6 et 600, Y est un atome d'hydrogène ou un groupe méthyle, et
R et R', identique ou différent pour chaque motif, sont choisis dans le groupe comprenant, les atomes d'halogène choisi parmi l'iode, le brome, le fluor et le chlore, le groupe des (C₁-₁₈)alkyles, les amines primaire (-NH₂), secondaire (-NHRa₁ Ra₁ étant choisi parmi les groupes (C₁-C₅)alkyles et les cycles aromatiques) ou tertiaire (-NRa₁Ra₂, où Ra₁ et Ra2 identiques ou différents peuvent être chacun indépendamment l'un de l'autre un groupe (C₁-C₅)alkyle ou un cycle aromatique), l'hydroxyle (-OH), les alcoolates (ou un sel) (Ra₁-O⁻, Ra₁ étant choisi parmi les groupes (C₁-C₅)alkyles et les cycles aromatiques), les groupes (C₁-C₅)alkoxy, un thiol (-SH), les thioéther (-SRa₁, Ra₁ étant choisi parmi les groupes (C₁-C₅)alkyles et les cycles aromatiques), un thiolate (ou un sel) (Ra₁-S⁻, Ra₁ étant choisi parmi les groupes (C₁-C₅)alkyle et les cycles aromatiques), un cycle aromatique, une base conjuguée d'un acide carboxylique (-COO⁻), un groupe carboxylique (-COOH), les esters (-CO₂ Ra₁, Ra₁ étant choisi parmi les groupes (C₁-C₅)alkyles et les hétérocycles), un groupe aldéhyde (-CHO), un carbonyle (-COR), un groupe nitro (-NO₂), un groupe nitrile (-CN), un groupe sulfonyle (-SO₂-), un groupe sulfonate (sel ou acide)(-SO₃), un sulfone (-SO₂R), un groupe phosphate -O-PO(ORa₁)(ORa₂) où Ra₁ et Ra₂ identiques ou différents peuvent être chacun indépendamment l'un de l'autre un groupe hydrogène ou (C₁-C₅)alkyle ou un cycle aromatique), un groupe amide primaire (-CONH₂), secondaire (-CONHRa₁, Ra₁ étant choisi parmi les groupes (C₁-C₅)alkyles et les cycles aromatiques ) ou tertiaire (-CONRa₁Ra₂, Ra₁ et Ra₂ identiques ou différents peuvent être chacun indépendamment l'un de l'autre un groupe (C₁-C₅)alkyle ou un cycle aromatique.

10. Composition de polymères obtenue par le procédé selon l'une quelconque des revendications 1 à 8.

11. Utilisation des compositions selon la revendication 10 comme additif à des mélanges d'élastomères frais ou neufs, comme additifs ou réactifs de type agents tensioactifs, agents réticulants ou extenseurs de chaîne.

12. Utilisation d'élastomères fonctionnalisés selon la revendication 9 comme matériaux, en particulier comme élastomères thermoplastiques ou élastomères pour le biomédical.

## Patentansprüche

1. Verfahren zur Synthese von Polymeren durch Devulkanisation aus Elastomere enthaltenden Abfällen, wobei das Verfahren Folgendes umfasst:
- a) das Inkontaktbringen der Elastomere enthaltenden Abfälle mit einem Lösungsmittel in Gegenwart eines Mittels zur Devulkanisation von Vernetzungsknoten, die ein Schwefelatom, das an ein anderes Schwefelatom oder an ein Kohlenstoffatom gebunden ist, umfassen,
- b) das Erhitzen der in Schritt a) erhaltenen Mischung auf eine Temperatur zwischen 20 °C und 250 °C über eine Dauer zwischen 15 Minuten und 24 Stunden,
wobei das Verfahren **dadurch gekennzeichnet ist, dass**:
- es sich bei dem Devulkanisationsmittel um eine Verbindung gemäß Formel (1) handelt: 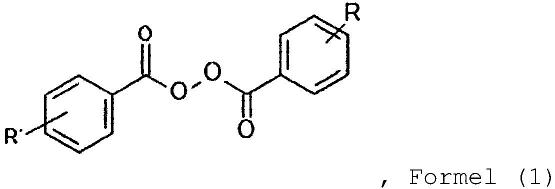 wobei R und R' gleich oder verschieden sind und jeweils unabhängig voneinander für einen Substituenten, der einen mesomeren Donoreffekt oder einen mesomeren Akzeptoreffekt oder einen induktiven Donoreffekt oder einen induktiven Akzeptoreffekt ausübt, stehen, R und R' unabhängig voneinander aus der Gruppe umfassend Wasserstoff (-H), Halogenatome, die aus Iod, Brom, Fluor und Chlor ausgewählt sind, die Gruppe der (C₁-₁₈)-Alkylgruppen, primäre Amine (-NH₂), sekundäre Amine (-NHRa₁, wobei Ra₁ aus (C₁-C₅)-Alkylgruppen und aromatischen Ringen ausgewählt ist) oder tertiäre Amine (-NRa₁Ra₂, wobei Ra₁ und Ra₂, die gleich oder verschieden sind, jeweils unabhängig voneinander eine (C₁-C₅)-Alkylgruppe oder ein aromatischer Ring sein können), Hydroxyl (-OH), Alkoholate (oder ein Salz) (Ra₁-O⁻, wobei Ra₁ aus (C₁-C₅)-Alkylgruppen und aromatischen Ringen ausgewählt ist), (C₁-C₅)-Alkoxygruppen, ein Thiol (-SH), Thioether (-SRa₁, wobei Ra₁ aus (C₁-C₅)-Alkylgruppen und aromatischen Ringen ausgewählt ist), ein Thiolat (oder ein Salz) (Ra₁-S⁻), wobei Ra₁ aus (C₁-C₅) -Alkylgruppen und aromatischen Ringen ausgewählt ist), einen aromatischen Ring, eine konjugierte Base einer Carbonsäure (-COO⁻), eine Carboxylgruppe (-COOH), Ester (-CO₂ Ra₁, wobei Ra₁ aus (C₁-C₅)-Alkylgruppen und Heterocyclen ausgewählt ist), eine Aldehydgruppe (-CHO), ein Carbonyl (-COR), eine Nitrogruppe (-NO₂), eine Nitrilgruppe (-CN), eine Sulfonylgruppe (-SO₂-), eine Sulfonatgruppe (Salz oder Säure) (-SO₃), ein Sulfon (-SO₂R), eine Phosphatgruppe - O-PO(ORa₁)(ORa₂), wobei Ra₁ und Ra₂, die gleich oder verschieden sind, jeweils unabhängig voneinander eine Wasserstoff- oder (C₁-C₅)-Alkylgruppe oder ein aromatischer Ring sein können), eine primäre Amidgruppe (-CONH₂), eine sekundäre Amidgruppe (-CONHRa₁, wobei Ra₁ aus (C₁-C₅)-Alkylgruppen und aromatischen Ringen ausgewählt ist) oder eine tertiäre Amidgruppe (-CONRa₁Ra₂, wobei Ra₁ und Ra₂, die gleich oder verschieden sind, jeweils unabhängig voneinander eine (C₁-C₅)-Alkylgruppe oder ein aromatischer Ring sein können)) ausgewählt sind und R, R' oder beide von einem Wasserstoffatom verschieden sind.

2. Verfahren nach Anspruch 1, wobei die Devulkanisationsmittelkonzentration derart ist, dass das Verhältnis der Devulkanisationsmittelkonzentration, ausgedrückt in Teilen pro hundert Elastomer (phr) und einem Lösungsmittelvolumen, ausgedrückt in ml:
- größer als 0,3 phr/ml Lösungsmittel oder kleiner als 0,2 phr/ml Lösungsmittel ist, wenn das Verfahren an der Luft durchgeführt wird,
- größer als 0,06 phr/ml Lösungsmittel ist, wenn das Verfahren unter Inertatmosphäre durchgeführt wird.

3. Verfahren nach Anspruch 1 oder 2, wobei es sich bei dem Lösungsmittel um ein organisches Lösungsmittel oder eine ionische Flüssigkeit oder ein stark eutektisches Lösungsmittel oder eine Mischung davon handelt.

4. Verfahren nach einem der Ansprüche 1 bis 3, **dadurch gekennzeichnet, dass** die Dauer des Erhitzens der Mischung zwischen 2 Stunden und 4 Stunden liegt, wenn das Verfahren unter Inertatmosphäre durchgeführt wird.

5. Verfahren nach einem der Ansprüche 1 bis 3, wobei die Dauer des Erhitzens der Mischung zwischen 3 Stunden und 5 Stunden liegt, wenn das Verfahren an der Luft durchgeführt wird.

6. Verfahren nach einem der Ansprüche 1 bis 5, **dadurch gekennzeichnet, dass** es vor Schritt a) einen Schritt der Aktivierung der Elastomere enthaltenden Abfälle durch Lyophilisation oder durch Quellung umfasst.

7. Verfahren nach Anspruch 6, wobei die Devulkanisationsreaktion und der Schritt der Aktivierung der Elastomere enthaltenden Abfälle kontinuierlich durchgeführt wird.

8. Verfahren nach einem der Ansprüche 1 bis 7, **dadurch gekennzeichnet, dass** die Synthese der Polymere durch die Devulkanisation ausgehend von Abfällen von hochvulkanisierten Elastomeren durchgeführt wird.

9. Funktionalisiertes Elastomer gemäß Formel 3 oder 3', 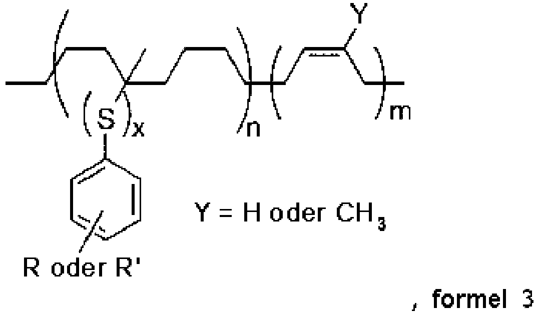 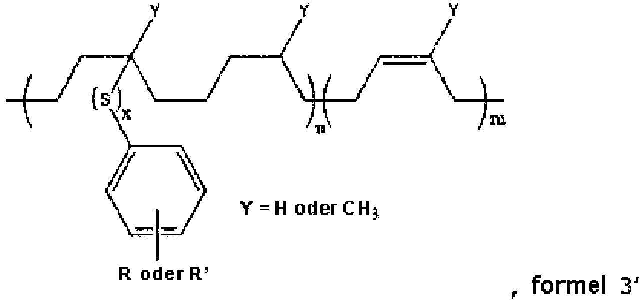
wobei x für eine ganze Zahl zwischen 0 und 6 steht, n für eine ganze Zahl zwischen 6 und 600 steht, m für eine ganze Zahl zwischen 6 und 600 steht, Y für ein Wasserstoffatom oder eine Methylgruppe steht und
R und R' für jede Einheit gleich oder verschieden sind und aus der Gruppe umfassend Halogenatome, die aus Iod, Brom, Fluor und Chlor ausgewählt sind, die Gruppe der (C₁-₁₈) -Alkylgruppen, primäre Amine (-NH₂), sekundäre Amine (-NHRa₁, wobei Ra₁ aus (C₁-C₅) -Alkylgruppen und aromatischen Ringen ausgewählt ist) oder tertiäre Amine (-NRa₁Ra₂, wobei Ra₁ und Ra₂, die gleich oder verschieden sind, jeweils unabhängig voneinander eine (C₁-C₅)-Alkylgruppe oder ein aromatischer Ring sein können), Hydroxyl (-OH), Alkoholate (oder ein Salz) (Ra₁-O⁻, wobei Ra₁ aus (C₁-C₅) -Alkylgruppen und aromatischen Ringen ausgewählt ist), (C₁-C₅) -Alkoxygruppen, ein Thiol (-SH), Thioether (-SRa₁, wobei Ra₁ aus (C₁-C₅) -Alkylgruppen und aromatischen Ringen ausgewählt ist), ein Thiolat (oder ein Salz) (Ra₁-S⁻), wobei Ra₁ aus (C₁-C₅) -Alkylgruppen und aromatischen Ringen ausgewählt ist), einen aromatischen Ring, eine konjugierte Base einer Carbonsäure (-COO⁻), eine Carboxylgruppe (-COOH), Ester (-CO₂ Ra₁, wobei Ra₁ aus (C₁-C₅) -Alkylgruppen und Heterocyclen ausgewählt ist), eine Aldehydgruppe (-CHO), ein Carbonyl (-COR), eine Nitrogruppe (-NO₂), eine Nitrilgruppe (-CN), eine Sulfonylgruppe (-SO₂-), eine Sulfonatgruppe (Salz oder Säure) (-SO₃), ein Sulfon (-SO₂R), eine Phosphatgruppe - O-PO(ORa₁) (ORa₂), wobei Ra₁ und Ra₂, die gleich oder verschieden sind, jeweils unabhängig voneinander eine Wasserstoff- oder (C₁-C₅)-Alkylgruppe oder ein aromatischer Ring sein können), eine primäre Amidgruppe (-CONH₂), eine sekundäre Amidgruppe (-CONHRa₁, wobei Ra₁ aus (C₁-C₅) -Alkylgruppen und aromatischen Ringen ausgewählt ist) oder eine tertiäre Amidgruppe (-CONRa₁Ra₂, wobei Ra₁ und Ra₂, die gleich oder verschieden sind, jeweils unabhängig voneinander eine (C₁-C₅)-Alkylgruppe oder ein aromatischer Ring sein können) ausgewählt sind.

10. Polymerzusammensetzung, erhalten durch das Verfahren nach einem der Ansprüche 1 bis 8.

11. Verwendung der Zusammensetzungen nach Anspruch 10 als Additiv in Mischungen von frischen oder neuen Elastomeren, als Additive oder Reagenzien vom Typ Tenside, Vernetzungsmittel oder Kettenverlängerungsmittel.

12. Verwendung von funktionalisierten Elastomeren nach Anspruch 9 als Materialien, insbesondere als thermoplastische Elastomere oder Elastomere für die Biomedizin.

## Claims

1. Process for synthesizing polymers by devulcanization from elastomer-containing waste, said process comprising:
- a) bringing said elastomer-containing waste into contact with a solvent in the presence of an agent for the devulcanization of crosslinking nodes that comprise a sulfur atom bonded to another sulfur atom or to a carbon atom,
- b) heating the mixture obtained in step a), to a temperature of between 20°C and 250°C for a duration of between 15 minutes and 24 hours,
said process being **characterized in that**:
- the devulcanization agent is a compound according to formula (1) 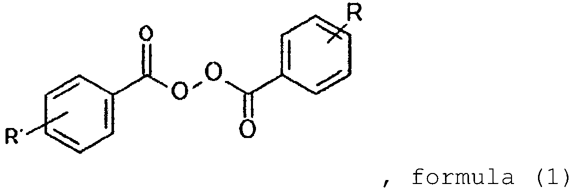 in which R and R' are identical or different and each represent, independently of one another, a substituent exerting a donating mesomeric effect or a withdrawing mesomeric effect or a donating inductive effect or a withdrawing inductive effect, R and R' are chosen independently of one another from the group comprising hydrogen (-H), halogen atoms chosen from iodine, bromine, fluorine and chlorine, the group of (C₁-C₁₈)alkyls, primary amines (-NH₂), secondary amines (-NHRa₁, Ra₁ being chosen from (C₁-C₅) alkyl groups and aromatic rings) or tertiary amines (-NRa₁Ra₂, where Ra₁ and Ra₂, which may be identical or different, may each independently of one another be a (C₁-C₅) alkyl group or an aromatic ring), hydroxyl (-OH), alkoxides (or a salt) (Ra₁-O⁻, Ra₁ being chosen from (C₁-C₅) alkyl groups and aromatic rings), (C₁-C₅) alkoxy groups, a thiol (-SH), thioethers (-SRa₁, Ra₁ being chosen from (C₁-C₅)alkyl groups and aromatic rings), a thiolate (or a salt) (Ra₁-S⁻, Ra₁ being chosen from (C₁-C₅)alkyl groups and aromatic rings), an aromatic ring, a conjugate base of a carboxylic acid (-COO⁻), a carboxylic group (-COOH), esters (-CO₂ Ra₁, Ra₁ being chosen from (C₁-C₅)alkyl groups and heterocycles), an aldehyde group (-CHO), a carbonyl (-COR), a nitro group (-NO₂), a nitrile group (-CN), a sulfonyl group (-SO₂-), a sulfonate group (salt or acid) (-SO₃), a sulfone (-SO₂R), a phosphate group (-O-PO(ORa₁) (ORa₂), where Ra₁ and Ra₂, which may be identical or different, may each independently of one another be a hydrogen or (C₁-C₅)alkyl group or an aromatic ring), a primary amide group (-CONH₂), secondary amide group (-CONHRa₁, Ra₁ being chosen from (C₁-C₅) alkyl groups and aromatic rings) or tertiary amide group (-CONRa₁Ra₂, Ra₁ and Ra₂, which may be identical or different, may each independently of one another be a (C₁-C₅)alkyl group or an aromatic ring) and R, R' or both are different from a hydrogen atom.

2. Process according to Claim 1, in which the concentration of devulcanization agent is such that the ratio between said concentration of devulcanization agent, expressed as parts per hundred of elastomer (phr), and a volume of solvent, expressed in ml, is:
- greater than 0.3 phr/ml of solvent or less than 0.2 phr/ml of solvent when the process is carried out under air,
- greater than 0.06 phr/ml of solvent when the process is carried out under an inert atmosphere.

3. Process according to Claim 1 or 2, in which the solvent is an organic solvent or an ionic liquid or a deep eutectic solvent or the mixture thereof.

4. Process according to any one of Claims 1 to 3, **characterized in that** the duration of heating of the mixture is between 2 hours and 4 hours when the process is carried out under an inert atmosphere.

5. Process according to any one of Claims 1 to 3, in which the duration of heating of the mixture is between 3 hours and 5 hours when the process is carried out under air.

6. Process according to any one of Claims 1 to 5, **characterized in that** it comprises, prior to step a), a step of activating the elastomer-containing waste by lyophilization or by swelling.

7. Process according to Claim 6, in which the devulcanization reaction and the step of activating the elastomer-containing waste are performed continuously.

8. Process according to any one of Claims 1 to 7, **characterized in that** the synthesis of the polymers by devulcanization is carried out from highly vulcanized elastomer waste.

9. Functionalized elastomer according to formula 3 or 3', 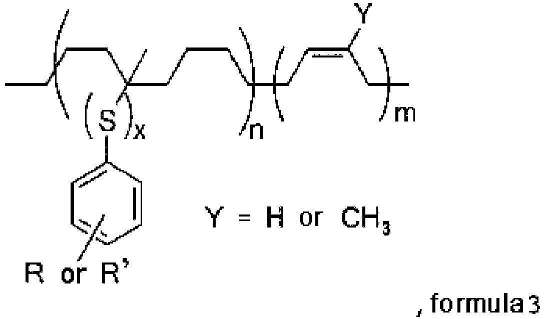 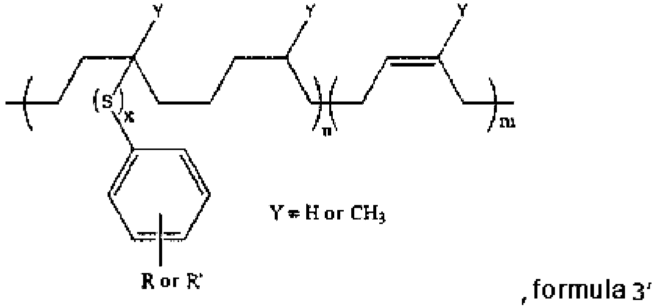
in which x is an integer between 0 and 6, n is an integer between 6 and 600, m is an integer between 6 and 600, Y is a hydrogen atom or a methyl group, and
R and R', which may be identical or different for each unit, are chosen from the group comprising halogen atoms chosen from iodine, bromine, fluorine and chlorine, the group of (C₁-C₁₈)alkyls, primary amines (-NH₂), secondary amines (-NHRa₁, Ra₁ being chosen from (C₁-C₅)alkyl groups and aromatic rings) or tertiary amines (-NRa₁Ra₂, where Ra₁ and Ra₂, which may be identical or different, may each independently of one another be a (C₁-C₅)alkyl group or an aromatic ring), hydroxyl (-OH), alkoxides (or a salt) (Ra₁-O⁻, Ra₁ being chosen from (C₁-C₅)alkyl groups and aromatic rings), (C₁-C₅)alkoxy groups, a thiol (-SH), thioethers (-SRa₁, Ra₁ being chosen from (C₁-C₅)alkyl groups and aromatic rings), a thiolate (or a salt) (Ra₁-S⁻, Ra₁ being chosen from (C₁-C₅)alkyl groups and aromatic rings), an aromatic ring, a conjugate base of a carboxylic acid (-COO⁻), a carboxylic group (-COOH), esters (-CO₂ Ra₁, Ra₁ being chosen from (C₁-C₅)alkyl groups and heterocycles), an aldehyde group (-CHO), a carbonyl (-COR), a nitro group (-NO₂), a nitrile group (-CN), a sulfonyl group (-SO₂-), a sulfonate group (salt or acid) (-SO₃), a sulfone (-SO₂R), a phosphate group (-O-PO (ORa₁) (ORa₂), where Ra₁ and Ra₂, which may be identical or different, may each independently of one another be a hydrogen or (C₁-C₅)alkyl group or an aromatic ring), a primary amide group (-CONH₂), secondary amide group (-CONHRa₁, Ra₁ being chosen from (C₁-C₅)alkyl groups and aromatic rings) or tertiary amide group (-CONRa₁Ra₂, Ra₁ and Ra₂, which may be identical or different, may each independently of one another be a (C₁-C₅)alkyl group or an aromatic ring).

10. Polymer composition obtained by the process according to any one of Claims 1 to 8.

11. Use of the compositions according to Claim 10 as an additive to fresh or new elastomer mixtures, as additives or reagents of surfactant, crosslinking agent or chain extender type.

12. Use of functionalized elastomers according to Claim 9 as materials, in particular as thermoplastic elastomers or elastomers for the biomedical field.
